# EUROPEAN PATENT APPLICATION

(11) **EP 4 432 013 A1**
(43) Date of publication of application: **18.09.2024**
(21) Application number: 24162407.1
(22) Date of filing: 08.03.2024
(51) Int. Cl.: G03G 15/00

(54) **SHEET CHARACTERISTIC DETECTION SYSTEM, SHEET CHARACTERISTIC DETECTION CONTROL DEVICE, SHEET CHARACTERISTIC DETECTION CONTROL PROGRAM, AND IMAGE FORMING SYSTEM**

(30) Priority: 16.03.2023 JP 2023041507
(71) Applicant: KONICA MINOLTA, INC., Tokyo 100-7015 (JP)
(72) Inventor: OKAMOTO, Akira, Tokyo, 100-7015 (JP); YAMAGUCHI, Hiroshi, Toyko, 100-7015 (JP); WATANABE, Masayuki, Toyko, 100-7015 (JP); YAMAMOTO, Kenji, Tokyo, 100-7015 (JP)
(74) Representative: MFG Patentanwälte Meyer-Wildhagen Meggle-Freund Gerhard PartG mbB

(57) **Abstract**

The present disclosure enables detection of only sheet characteristics necessary for a system.

An image forming system (100) according to one aspect of the present invention includes: a sheet characteristic detection device (2) that includes a plurality of media sensors corresponding to a plurality of different sheet characteristics; and a controller (30 or 20) enabling change of the type of sheet characteristics detected by the plurality of media sensors.

## Description

### Background

### Technological Field

The present invention relates to a sheet characteristic detection system, a sheet characteristic detection control device, a sheet characteristic detection control program, and an image forming system.

### Description of the Related art

Conventionally, for the purpose of optimizing sheet processing such as conveyance, processing, and printing in response to a wide variety of sheets, sheet characteristics are detected using a media sensor, and processing is performed under conditions suitable for the detected sheet characteristics. For example, JP 2022-89499 A discloses a technique using a sheet characteristic detection device (media sensor unit) in which a plurality of media sensors capable of measuring a plurality of sheet characteristics such as a surface property, a basis weight, a water content, rigidity, and resistance are unitized.

The media sensor unit described in JP 2022-89499 A and the like can be used in various systems such as a system including an image forming device and a system that performs sheet processing. However, if it is attempted to measure various sheet characteristics without exception by the media sensor unit described in JP 2022-89499 A, there is a problem that measurement takes time and productivity of the entire system decreases.

For example, in a sheet characteristic detection device used in a system including an image forming device, it is necessary to detect many types of sheet characteristics for the purpose of optimizing processing conditions and the like, or it is also necessary to detect sheet characteristics with high accuracy. On the other hand, in a sheet characteristic detection device used in a system that performs only sheet processing, it is not necessary to detect sheet characteristics required for image formation.

Examples of the sensor that detects the sheet characteristics include a sensor such as a basis weight detection sensor that can measure while conveying the sheet, and a sensor such as a resistance detection sensor or a rigidity detection sensor that is difficult to accurately measure unless the conveyance of the sheet is stopped. Furthermore, depending on the content of the system to which the sheet characteristic detection device is applied, there may be a sensor that requires high accuracy in detecting the sheet characteristic to be detected, a sensor that does not require high detection accuracy, or the like.

Therefore, when the sheet characteristic detection device detects all sheet characteristics without exception, for example, in a system that performs only sheet processing, unnecessary sheet characteristics are also detected. In this case, the time to stop the conveyance of the sheet, the time to stand by, and the like increase, and productivity decreases. Similarly, there is a case where necessary sheet characteristics are different depending on the type of sheet processing, the type of device, and the like, and when it is attempted to detect all sheet characteristics without exception as the sheet characteristic detection device, a similar problem occurs.

### Summary

The present invention has been made to solve the above problems, and an object of the present invention is to enable detection of sheet characteristics necessary for a system.

To achieve the abovementioned object, according to an aspect of the present invention, a sheet characteristic detection system reflecting one aspect of the present invention comprises: a sheet characteristic detection device that includes a plurality of media sensors corresponding to a plurality of different sheet characteristics; and a controller that is capable of changing a type of the sheet characteristic to be detected by the plurality of media sensors.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a diagram illustrating a configuration example of an image forming system according to Example 1 of a first embodiment of the present invention;
Fig. 2 is a block diagram illustrating a configuration example of each control system of a sheet characteristic detection device and an image forming device according to an embodiment of the present invention;
Fig. 3 is a diagram illustrating a configuration example of an image forming system according to Example 2 of the first embodiment of the present invention;
Fig. 4 is a block diagram illustrating a configuration example of a control system of an image forming device according to an embodiment of the present invention;
Fig. 5 is a flowchart illustrating an example of a procedure of sheet characteristic detection control processing by the sheet characteristic detection system according to the first embodiment of the present invention;
Fig. 6 is a flowchart illustrating an example of a procedure of control parameter setting processing based on a detection result by the sheet characteristic detection device according to the first embodiment of the present invention;
Fig. 7 is a diagram illustrating a configuration example of an image forming system according to a second embodiment of the present invention;
Fig. 8 is a flowchart illustrating an example of a procedure of image formation control processing according to Example 3 of the second embodiment of the present invention;
Fig. 9 is a flowchart illustrating an example of a procedure of image formation control processing according to Example 4 of the second embodiment of the present invention;
Fig. 10 is a diagram illustrating a configuration example of an image forming system according to Example 1 of the third embodiment of the present invention;
Fig. 11 is a diagram illustrating a configuration example of an image forming system according to Example 2 of the third embodiment of the present invention;
Fig. 12 is a flowchart illustrating an example of a procedure of sheet characteristic detection setting processing by the image forming system according to the third embodiment of the present invention;
Fig. 13 is a flowchart illustrating an example of a procedure of sheet characteristic detection setting processing by the image forming system according to the third embodiment of the present invention;
Fig. 14 is a flowchart illustrating an example of a procedure of sheet characteristic detection setting processing by the image forming system according to the third embodiment of the present invention;
Fig. 15 is a flowchart illustrating an example of a procedure of sheet characteristic detection setting processing by the image forming system according to the third embodiment of the present invention;
Fig. 16 is a flowchart illustrating an example of a procedure of sheet characteristic detection setting processing by the image forming system according to the third embodiment of the present invention;
Fig. 17 is a diagram illustrating a configuration example of an image forming system including a sheet feeding device incorporating a sheet characteristic detection unit according to a modification of the present invention;
Fig. 18 is a diagram illustrating a configuration example of an image forming system including a cutter incorporating a sheet characteristic detection unit according to a modification of the present invention; and
Fig. 19 is a diagram illustrating a configuration example of a sheet characteristic detection device according to a modification.

### Detailed Description of Embodiments

Hereinafter, one or more embodiments of the present invention will be described with reference to the drawings. However, the scope of the invention is not limited to the disclosed embodiments. In the present specification and the drawings, elements having substantially the same function or configuration are denoted by the same reference numerals, and redundant description is omitted.

The sheet characteristic detection device according to the present invention is capable of detecting a plurality of types of sheet characteristics, and changes the type of sheet characteristics to be detected according to the connection (disposition) position of the sheet characteristic detection device in the sheet characteristic detection system, the type of device connected to the sheet characteristic detection device, the type of post-processing set in a job, and the like.

### <First Embodiment>

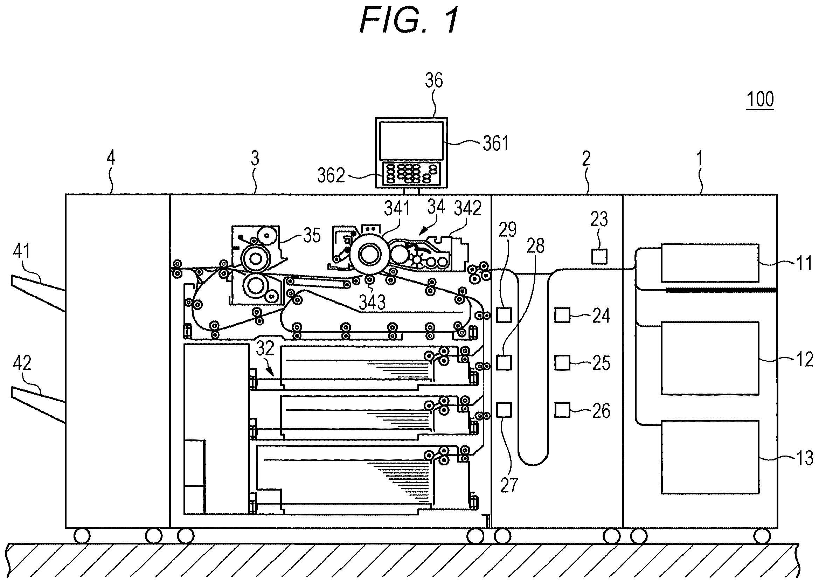

In the first embodiment, an example in which one sheet characteristic detection device is included in an image forming system to which the sheet characteristic detection system is applied will be described. Fig. 1 is a diagram illustrating a configuration example of an image forming system 100 according to Example 1 of the first embodiment.

### [Example 1]

In Example 1, as illustrated in Fig. 1, the image forming system 100 includes a sheet feeding device 1, a sheet characteristic detection device 2, an image forming device 3, and a sheet discharge unit 4. In the image forming system 100, the sheet characteristic detection device 2 is connected to a position in a subsequent stage of the sheet feeding device 1 and in a preceding stage of the image forming device 3.

### (Sheet Feeding Device)

The sheet feeding device 1 includes sheet feeding trays 11 to 13, and conveys the sheet fed from each of the sheet feeding trays 11 to 13 to the sheet characteristic detection device 2. Although Fig. 1 illustrates an example in which the sheet feeding device 1 includes three sheet feeding trays, the present invention is not limited thereto. The number of sheet feeding trays included in the sheet feeding device 1 is not limited to three. Further, the sheet characteristic detection device 2 of the present invention may be applied to an image forming device that does not include the sheet feeding device 1.

### (Sheet Characteristic Detection Device)

The sheet characteristic detection device 2 includes media sensors: a sheet size detection sensor 23, a sheet thickness detection sensor 24, a moisture content detection sensor 25, a basis weight detection sensor 26, a rigidity detection sensor 27, a surface property detection sensor 28, and a sheet resistivity detection sensor 29.

The sheet size detection sensor 23 includes, for example, a line sensor such as a contact image sensor (CIS), and detects the size of sheet on the basis of the size of each pixel read by the line sensor.

The sheet thickness detection sensor 24 detects the thickness of the sheet (sheet thickness) on the basis of a distance between two members in a case where the sheet is sandwiched between the two members of a sheet thickness detector (not illustrated).

The moisture content detection sensor 25 includes, for example, a moisture content sensor or the like that detects the moisture content of the sheet by optically detecting the light absorption amount of near-infrared OH groups on the basis of transmitted light of the sheet. As the moisture content detection sensor, a sensor that measures a light amount change of a reflection component inside the sheet using reflected light separated by a deflection filter may be used.

The basis weight detection sensor 26 includes, for example, a transmission type optical sensor including a light emitter and a light receiver, and detects the basis weight of the sheet on the basis of an attenuation rate (transmittance) of light transmitted through the sheet.

The rigidity detection sensor 27 includes, for example, a push-up member that pushes up the sheet and a pressing force detector (not illustrated) that detects a pressing force, and acquires the pressing force detected by the pressing force detector when the sheet is bent by the push-up member as the rigidity of the sheet. The rigidity of the sheet is detected by the rigidity detection sensor 27 while the conveyance of the sheet is temporarily stopped.

The surface property detection sensor 28 includes, for example, a housing, a light emitter, a collimating lens, and a plurality of light receivers (all not illustrated). The surface property detection sensor 28 detects surface properties such as smoothness, glossiness, and irregularity degree of the surface of the sheet on the basis of regular reflection light and diffuse reflection light from the surface of the sheet received by the plurality of light receivers. The surface property of the sheet is detected by the surface property detection sensor 28 while the conveyance of the sheet is temporarily stopped.

The sheet resistivity detection sensor 29 detects physical properties according to the electrical resistance inside or on the surface of the sheet. For example, the sheet resistivity detection sensor 29 applies a high voltage to the sheet, and electrically measures the sheet resistivity on the basis of the voltage at that time and the flowing current. The detection of the sheet resistivity by the sheet resistivity detection sensor 29 is performed in a state where the conveyance of the sheet is temporarily stopped.

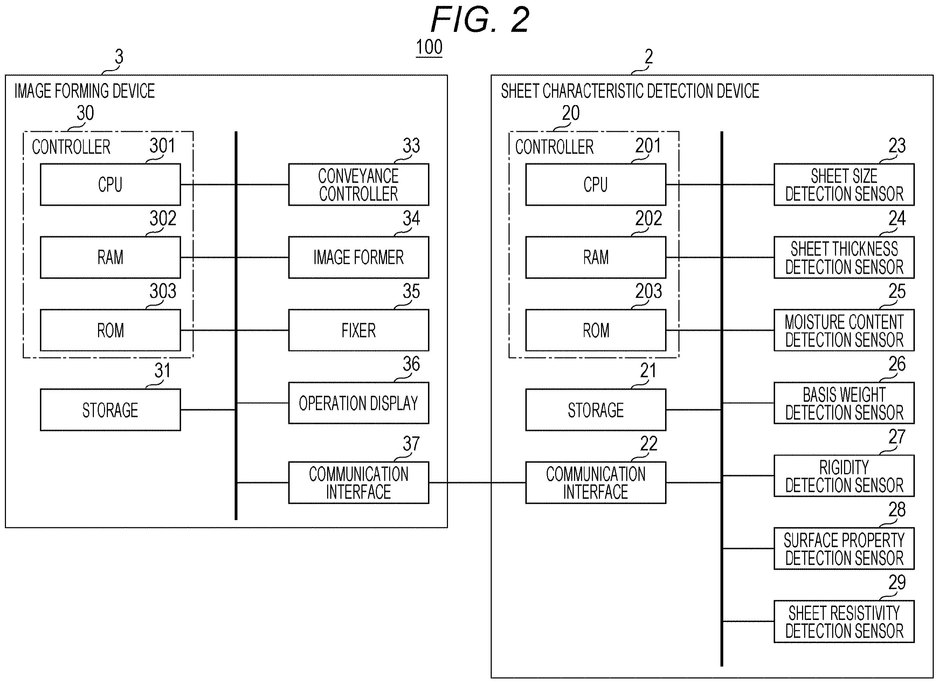

Each detection result by each detection sensor of the sheet characteristic detection device 2 is transmitted to the subsequent image forming device 3. Then, the controller 30 (see Fig. 2) of the image forming device 3 controls a sheet feeding operation in the sheet feeding device 1 or an image forming operation in the image forming device 3 on the basis of various detection results transmitted from the sheet characteristic detection device 2.

Note that the media sensor included in the sheet characteristic detection device 2 and the type of sheet characteristics detected by the media sensor are not limited to the example illustrated in Fig. 1.

### (Image Forming Device)

The image forming device 3 is a direct transfer type monochrome image forming device using an electrophotographic process technology. That is, the image forming device 3 forms an image by directly transferring the toner image of the K component (black) formed on the photosensitive drum 341 onto a sheet. The image forming device 3 forms an image on a sheet on the basis of a job transmitted from a terminal device (not illustrated) or the like. In the present embodiment, the image forming device 3 is a monochrome image forming device, but the present invention is not limited thereto. The image forming device according to the present invention may be applied to a color image forming device.

As illustrated in Fig. 1, the image forming device 3 includes a sheet feeding tray 32, an image former 34, a fixer 35, and an operation display 36.

The sheet feeding tray 32 includes three sheet feeding trays 321 to 323. The sheet stored in each sheet feeding tray is fed by the conveyance controller 33 (see Fig. 2) and conveyed to the image former 34. Note that the number of sheet feeding trays included in the sheet feeding tray 32 is not limited to three, and may be two or less or four or more.

The image former 34 includes a photosensitive drum 341, a developing device 342, a transferrer 343, and the like. The developing device 342 forms a toner image by visualizing an electrostatic latent image by attaching a K component toner to the surface of the photosensitive drum 341. The transferrer 343 transfers the toner image formed on the photosensitive drum 341 onto a sheet.

The fixer 35 performs fixing processing of fixing the image on the sheet by heating and pressing the sheet to which the toner image has been transferred by the transferrer 343.

The operation display 36 includes a display 361 including a liquid crystal panel or the like, and an operation inputter 362 including a button or the like. Note that the display 361 and the operation inputter 362 may be integrally formed as a touch panel. The operation display 36 generates an operation signal indicating the content of an operation from the user input to the operation inputter, and supplies the operation signal to the controller 30 (see Fig. 2).

### (Sheet Discharge Unit)

The sheet discharge unit 4 includes a sheet discharge tray 41 and a purge tray 42. The sheet discharge tray 41 is a tray on which a sheet on which an image is formed by the image forming device 3 is discharged. The purge tray 42 is a tray on which the printed matter in which the abnormality is detected, the sheet remaining in the image forming device 3 at the time of detecting the abnormality, and the like are discharged.

### (Configuration of Control Systems of Sheet Characteristic Detection Device and Image Forming Device)

Next, a configuration of each control system of the sheet characteristic detection device 2 and the image forming device 3 included in the image forming system 100 according to the present embodiment will be described with reference to Fig. 2. Fig. 2 is a block diagram illustrating a configuration example of each control system of the sheet characteristic detection device 2 and the image forming device 3.

As illustrated in Fig. 2, the image forming device 3 of the image forming system 100 includes a controller 30, a storage 31, a conveyance controller 33, an image former 34, a fixer 35, an operation display 36, and a communication interface 37.

The controller 30 includes a central processing unit (CPU) 301, a random access memory (RAM) 302, a read only memory (ROM) 303, and the like.

The CPU 301 is a central processing unit, and controls operation of each part of the image forming device 3. For example, the CPU 301 detects a connection state with another device such as the sheet characteristic detection device 2 connected to the own device, information on a connection position of each device, and the like. In the configuration of Example 1, that is, in the configuration in which the sheet characteristic detection device 2 is connected between the sheet feeding device 1 and the image forming device 3, the CPU 301 performs control to cause the sheet characteristic detection device 2 to detect all the sheet characteristics. That is, the CPU 301 causes all the media sensors included in the sheet characteristic detection device 2 to detect the respective sheet characteristics.

Then, the CPU 301 performs control to change the type of the sheet characteristic to be detected by the sheet characteristic detection device 2 on the basis of the detected connection information of the other device. That is, in the present embodiment, the image forming device 3 also functions as a sheet characteristic detection control device.

Note that the sheet characteristic detection control processing by the CPU 301 may be performed on the sheet characteristic detection device 2 side. In this case, the sheet characteristic detection device 2 functions as a sheet characteristic detection control device. Note that the sheet characteristic detection device is not limited to an example applied to a device provided in the image forming system 100, and may be applied to another device or the like connected to the image forming system 100 via a network.

In addition, the CPU 301 controls a sheet feeding operation in the sheet feeding device 1 and an image forming operation in the image former 34 on the basis of various sheet characteristics transmitted from the sheet characteristic detection device 2. Specifically, the CPU 301 performs control of the air adsorption amount in the air adsorption of the sheet feeding device 1, the air volume for separating the sheet, adjustment of the intake and exhaust port of the fan (not illustrated), optimization of the sheet feeding operation and the conveyance operation, and the like on the basis of information such as the size, the basis weight, the moisture content, the thickness, the rigidity, and the like of the sheet detected by the sheet characteristic detection device 2.

In addition, the CPU 301 controls a transfer current in the image former 34, a fixing temperature in the fixer 35, and the like (an example of a fixing condition) on the basis of the information of the basis weight, the moisture content, the thickness, the rigidity, and the surface property of the sheet. Further, the CPU 301 controls a transfer current (an example of a transfer condition) on the basis of the resistance value of the sheet. Further, the CPU 301 controls a position at which an image is formed on the sheet on the basis of the sheet size.

In addition, the CPU 301 sets each control parameter used for each control described above on the basis of various sheet characteristics detected by the sheet characteristic detection device 2, and stores the control parameter in the RAM 302, the storage 31, or the like. Then, when a job is executed, control parameters are read from the RAM 302, the storage 31, and the like, and control based on the control parameters is performed. The CPU 301 may read control parameters stored in advance in the ROM 303.

The RAM 302 is used as a work area when the CPU 301 executes a program.

The ROM 303 stores a system program for operating the image forming device 3, a program for executing sheet characteristic detection control processing according to the present embodiment, control parameters set on the basis of sheet characteristics, and the like.

The storage 31 includes, for example, a hard disk drive (HDD), a solid state drive (SSD), or the like. The storage 31 stores image data included in the job, control parameters being set on the basis of sheet characteristics, and the like. Note that the storage 31 may store a program for executing the sheet characteristic detection control processing according to the present embodiment.

The program (or application) stored in the ROM 303 or the storage 31 is stored in the form of a program code readable by a computer. That is, the ROM 303 or the storage 31 is used as an example of a computer-readable non-transitory recording medium storing a program to be executed by a computer.

The conveyance controller 33 performs control to convey the sheet fed from the sheet feeding device 1 (see Fig. 1) on a conveyance path (not illustrated) in the image forming device 3.

Since the image former 34, the fixer 35, and the operation display 36 have been described with reference to Fig. 1, the description thereof will be omitted.

The communication interface 37 controls various signal and data transmission/reception operations performed with other devices connected to the own device, such as the sheet characteristic detection device 2.

### (Sheet Characteristic Detection Device)

Next, a configuration of a control system of the sheet characteristic detection device 2 will be described with reference to Fig. 2. As illustrated in Fig. 2, the sheet characteristic detection device 2 includes the controller 20, the storage 21, the communication interface 22, the sheet size detection sensor 23, the sheet thickness detection sensor 24, the moisture content detection sensor 25, the basis weight detection sensor 26, the rigidity detection sensor 27, the surface property detection sensor 28, and the sheet resistivity detection sensor 29.

### The controller 20 includes a CPU 201, a RAM 202, and a ROM 203.

The CPU 201 is a central processing unit, and controls operation of each part of the sheet characteristic detection device 2. For example, the CPU 201 performs control to cause a corresponding media sensor among various media sensors included in the sheet characteristic detection device 2 to detect the type of sheet characteristics set by the image forming device 3.

### The RAM 202 is used as a work area when the CPU 201 executes a program.

The ROM 203 stores a system program and the like for operating the sheet characteristic detection device 2.

The storage 21 includes, for example, an HDD, an SSD, or the like, and the storage 21 stores setting information of the type of sheet characteristics transmitted from the image forming device 3. Note that a system program for operating the sheet characteristic detection device 2 may be stored in the storage 21.

The program (or application) stored in the ROM 203 or the storage 21 is stored in the form of a computer-readable program code. That is, the ROM 203 or the storage 21 is used as an example of a computer-readable non-transitory recording medium storing a program to be executed by a computer.

The communication interface 22 controls various signal and data transmission/reception operations performed with another device, such as the image forming device 3, connected to the own device.

The sheet size detection sensor 23, the sheet thickness detection sensor 24, the moisture content detection sensor 25, the basis weight detection sensor 26, the rigidity detection sensor 27, the surface property detection sensor 28, and the sheet resistivity detection sensor 29 have already been described with reference to Fig. 1, and thus, the description thereof will be omitted.

### [Example 2]

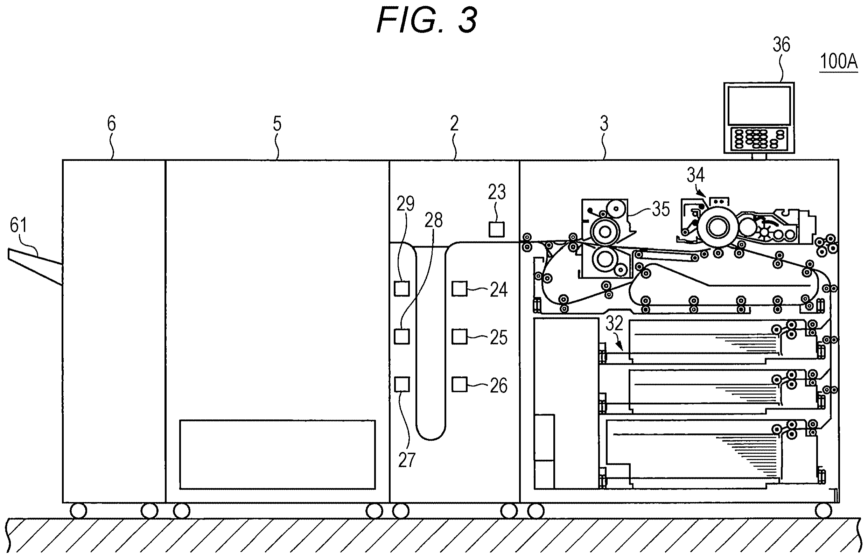

Next, an image forming system 100 according to Example 2 of the first embodiment of the present invention will be described with reference to Fig. 3. Fig. 3 is a diagram illustrating a configuration example of an image forming system 100A according to Example 2 of the first embodiment.

In Example 2, as illustrated in Fig. 3, the image forming system 100A includes an image forming device 3, a sheet characteristic detection device 2, a cutter 5, and a folding processing device 6. The cutter 5 is a device that cuts a sheet on which an image is formed by the image forming device 3. The folding processing device 6 is a device that binds sheets into a form of a booklet, and performs sheet folding processing, stapling processing, binding processing, and the like.

In the image forming system 100A, the sheet characteristic detection device 2 is connected between the image forming device 3 and the cutter 5. Also in the present example, the sheet characteristic detection control device of the present invention is applied to the image forming device 3. That is, the setting of the type of sheet characteristic to be detected by the sheet characteristic detection device 2 is performed by the controller 30 (see Fig. 2) of the image forming device 3.

In the present example, the controller 30 of the image forming device 3 performs control to cause the sheet characteristic detection device 2 to detect the thickness, the rigidity, and the size of sheet. Then, the controller 30 optimizes control parameters such as the cutting position of the sheet by the cutter 5 and the folding position of the sheet by the folding processing device 6 on the basis of the sheet size information detected by the sheet characteristic detection device 2.

In addition, the controller 30 adjusts cutting setting by the cutter 5 and the number of folded sheets by the folding processing device 6 on the basis of each information of the rigidity and the thickness of the sheet detected by the sheet characteristic detection device 2. The cutting setting includes, for example, a moving speed of a cutter (not illustrated) that cuts a sheet at the time of cutting processing.

The fixing processing is performed by the fixer 35 of the image forming device 3, and heat is applied to the sheet, whereby the moisture content of the sheet, the sheet size, and the like change. In particular, the moisture content of the sheet is greatly reduced as the sheet thickness is thinner. Therefore, the controller 30 controls the cutting position on the basis of the thickness, the rigidity, and the size of the sheet after the fixing processing, whereby the cutting accuracy can be improved.

In addition, in a case where the sheet is thick and/or in a case where the rigidity of the sheet is high, the load on the motor (not illustrated) that drives the cutter of the cutter 5 also increases. Therefore, when the thickness of the sheet detected by the sheet characteristic detection device 2 is thick and/or when the rigidity of the sheet is high, the controller 30 performs control to reduce the moving speed of the cutter, thereby reducing the load on the motor.

That is, according to Example 2, since various control parameters are optimized or set on the basis of the characteristics of the sheet affected by the fixing processing by the image forming device 3, the cutting accuracy by the cutter 5 and the folding accuracy by the folding processing device 6 can be further improved.

In addition, according to Example 2, since only the sheet characteristics required at the time of the cutting processing by the cutter 5 are detected by the sheet characteristic detection device 2, the time required for detection can be reduced as compared with the case where all the media sensors included in the sheet characteristic detection device 2 detect each sheet characteristic.

In Example 2, in the configuration in which the sheet characteristic detection device 2 is connected to the subsequent stage of the image forming device 3 and the preceding stage of the cutter 5, the controller 30 of the image forming device 3 controls the sheet characteristic detection device 2 to detect the thickness, the rigidity, and the size of the sheet, but the present invention is not limited thereto. The controller 30 may detect any one or a combination of the thickness, the rigidity, and the size of the sheet.

### [Example 3]

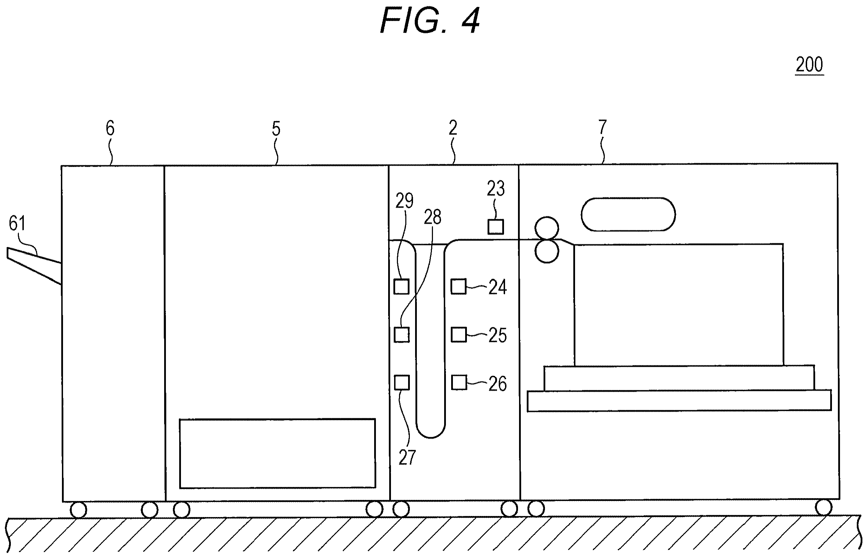

Next, a binding system 200 according to Example 3 of the first embodiment of the present invention will be described with reference to Fig. 4. Fig. 4 is a diagram illustrating a configuration example of a binding system 200 according to Example 3 of the first embodiment. A binding system 200 (an example of a sheet characteristic detection system) illustrated in Fig. 4 is a so-called offline binding system, and is a device that performs binding processing on a sheet on which an image has been formed by the image forming device 3 or the like.

In Example 3, the sheet characteristic detection device 2 is included in the binding system 200, and the binding system 200 includes the printed matter sheet feeding device 7, the sheet characteristic detection device 2, the cutter 5, and the folding processing device 6.

The printed matter sheet feeding device 7 is a device that feeds a sheet on which an image has been formed by the image forming device 3 or the like to a subsequent device, that is, the cutter 5 in the present example.

In the binding system 200, the sheet characteristic detection device 2 is connected to a position in a subsequent stage of the printed matter sheet feeding device 7 and in a preceding stage of the cutter 5.

In Example 3, the sheet characteristic detection control device according to the present invention is applicable to, for example, the sheet characteristic detection device 2 and the like. That is, the controller 20 (see Fig. 2) in the sheet characteristic detection device 2 performs the sheet characteristic detection control processing.

In the present example, the controller 20 in the sheet characteristic detection device 2 performs control to cause the sheet characteristic detection device 2 to detect the thickness, the rigidity, and the size of the sheet. Then, the controller 30 adjusts the cutting position and the like on the basis of the information of the thickness, the rigidity, and the size of the sheet detected by the sheet characteristic detection device 2.

Note that the device connected to the subsequent stage of the sheet characteristic detection device 2 may be another post-processing device such as a binding processing device that performs binding processing of sheets or a punch device that performs punching processing. In a case where the sheet characteristic detection system of the present invention is applied to a system including a post-processing device, a controller such as the image forming device 3 that functions as the sheet characteristic detection control device performs control to change the type of sheet characteristic to be detected by the sheet characteristic detection device 2 according to the type of function included in the post-processing device.

### [Sheet Characteristic Detection Control Processing]

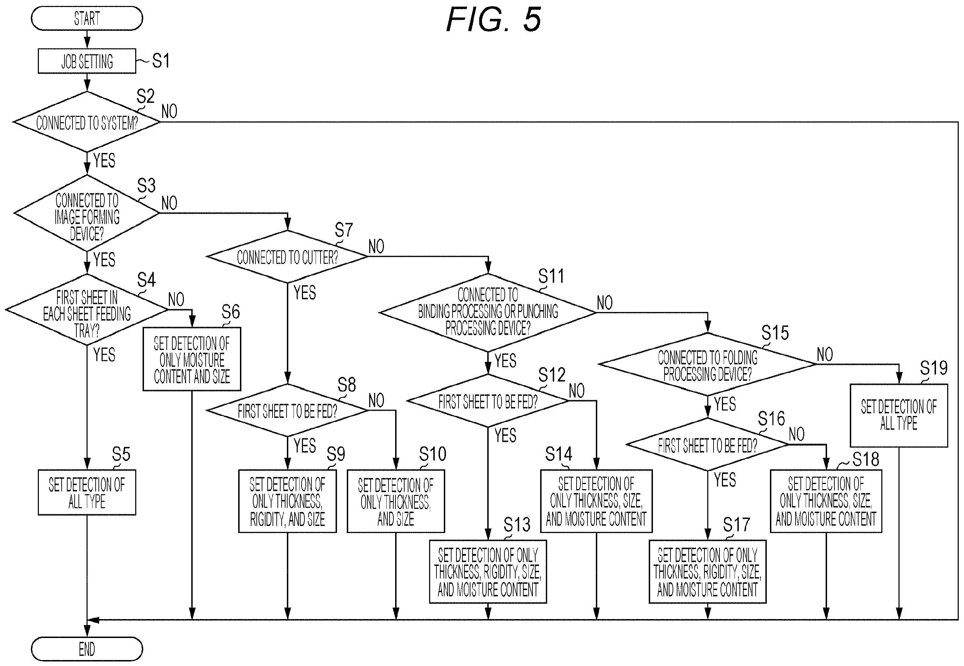

Next, sheet characteristic detection control processing by the sheet characteristic detection system (image forming system 100,100A, binding system 200, and the like) according to the first embodiment of the present invention will be described with reference to Fig. 5. Fig. 5 is a flowchart illustrating an example of a procedure of sheet characteristic detection control processing by the sheet characteristic detection system according to the first embodiment of the present invention. In the example illustrated in Fig. 5, the sheet characteristic detection control processing is performed by the controller 20 of the sheet characteristic detection device 2.

First, a job is set on the basis of an operation or the like by a user on a terminal device (not illustrated) (step S1). Next, the controller 20 of the sheet characteristic detection device 2 determines whether the own device is connected to the sheet characteristic detection system (step S2). If it is determined in step S2 that the device is not connected to the sheet characteristic detection system (NO in step S2), the sheet characteristic detection setting processing by the controller 20 of the sheet characteristic detection device 2 ends.

On the other hand, when it is determined in step S2 that the device is connected to the sheet characteristic detection system (YES in step S2), the controller 20 determines whether the device connected to the own device is the image forming device 3 (step S3). In a case where it is determined in step S3 that the image forming device 3 has been connected (YES in step S3), the controller 20 determines whether the sheet whose sheet characteristic is to be detected is the first sheet fed from each sheet feeding tray (sheet feeding trays 11 to 13: see Fig. 1) that stores the sheet to be used in the job (step S4).

When it is determined in step S4 that the sheet is the first sheet fed from the sheet feeding tray (YES in step S4), the controller 20 sets all types of sheet characteristics detected by the sheet characteristic detection device 2 (step S5). That is, the size, the thickness, the moisture content, the basis weight, the rigidity, the surface property, and the sheet resistivity of the sheet are set.

On the other hand, when it is determined in step S4 that the sheet is the second or subsequent sheet fed from the sheet feeding tray (NO in step S4), the controller 20 sets the sheet characteristics detected by the sheet characteristic detection device 2 only to the thickness, basis weight, moisture content, and sheet size of the sheet (step S6).

In step S6, the sheet characteristic to be detected by the sheet characteristic detection device 2 is limited to only the characteristic that changes by the image fixing processing. As a result, it is possible to further enhance the effect of preventing a decrease in productivity of the image forming system 100 while maintaining the print quality. After the processing in step S5 or step S6, the sheet characteristic detection setting processing by the controller 20 of the sheet characteristic detection device 2 ends.

If it is determined in step S3 that the image forming device 3 is not connected to the own device (NO in step S3), the controller 20 determines whether the cutter 5 is connected to the own device (step S7). If it is determined in step S7 that the cutter 5 has been connected (YES in step S7), the controller 20 determines whether the sheet whose sheet characteristic is to be detected is the first sheet fed to the sheet characteristic detection device 2 (step S8).

When it is determined in step S8 that the sheet is the first sheet (YES in step S8), the controller 20 sets the type of the sheet characteristic to be detected by the sheet characteristic detection device 2 only to the thickness, the rigidity, and the sheet size of the sheet (step S9). On the other hand, when it is determined in step S8 that the sheet is the second or subsequent sheet fed to the sheet characteristic detection device 2 (NO in step S8), the controller 20 sets the sheet characteristics detected by the sheet characteristic detection device 2 only to the thickness and the sheet size of the sheet (step S10). After the processing in step S9 or step S10, the sheet characteristic detection setting processing by the controller 20 of the sheet characteristic detection device 2 ends.

In a case where it is determined in step S7 that the cutter 5 is not connected to the own device (NO in step S7), the controller 20 determines whether or not the own device is connected to binding processing or punching processing device (not illustrated) (step S11). In a case where it is determined in step S11 that the device connected is the binding processing or punching processing device (YES in step S11), the controller 20 determines whether or not the sheet whose sheet characteristic is to be detected is the first sheet fed to the sheet characteristic detection device 2 (step S12).

When it is determined in step S12 that the sheet is the first sheet (YES in step S12), the controller 20 sets the type of the sheet characteristic to be detected by the sheet characteristic detection device 2 only to the thickness, the rigidity, the sheet size, and the moisture content of the sheet (step S13). On the other hand, when it is determined in step S12 that the sheet is the second or subsequent sheet fed to the sheet characteristic detection device 2 (NO in step S12), the controller 20 limits the sheet characteristics detected by the sheet characteristic detection device 2 only to the thickness, the sheet size, and the moisture content of the sheet (step S14).

After the processing in step S13 or step S14, the sheet characteristic detection setting processing by the controller 20 of the sheet characteristic detection device 2 ends.

In a case where it is determined in step S11 that the device connected to the own device is not the binding processing device or the punching processing device (NO in step S11), the controller 20 determines whether or not the own device is connected to the folding processing device (not illustrated) (step S15). If it is determined in step S15 that the folding processing device has been connected (YES in step S15), the controller 20 determines whether the sheet whose sheet characteristic is to be detected is the first sheet fed to the sheet characteristic detection device 2 (step S16).

When it is determined in step S16 that the sheet is the first sheet (YES in step S16), the controller 20 sets the type of the sheet characteristic to be detected by the sheet characteristic detection device 2 only to the thickness, the rigidity, the sheet size, and the moisture content (step S17). On the other hand, when it is determined in step S16 that the sheet is the second or subsequent sheet fed to the sheet characteristic detection device 2 (NO in step S16), the controller 20 sets the sheet characteristics detected by the sheet characteristic detection device 2 only to the thickness, the sheet size, and the moisture content of the sheet (step S18). After the processing in step S17 or step S18, the sheet characteristic detection setting processing by the controller 20 of the sheet characteristic detection device 2 ends.

In a case where it is determined in step S15 that the device connected to the own device is not the folding processing device (NO in step S15), the device connected to the sheet characteristic detection device 2 is a device other than the image forming device 3, the cutter 5, the binding processing device, the punching device, and the folding processing device. In this case, the controller 20 sets all types of sheet characteristics detected by the sheet characteristic detection device 2 (step S19). Then, after the processing of step S19, the sheet characteristic detection setting processing by the controller 20 of the sheet characteristic detection device 2 ends.

### [Control Parameter Setting Processing Based on Detection Result]

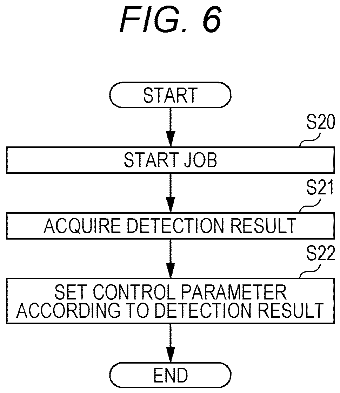

Next, control parameter setting processing based on a detection result by the sheet characteristic detection device 2 will be described with reference to Fig. 6. Fig. 6 is a flowchart illustrating an example of a procedure of control parameter setting processing based on a detection result by the sheet characteristic detection device 2.

First, a job in a device such as the image forming device 3 connected to the sheet characteristic detection device 2 is started (step S20). Next, the controller of the device that plays a role of the sheet characteristic detection control processing acquires the detection result of the sheet characteristic by the sheet characteristic detection device 2 (step S21). Next, the controller sets a control parameter according to the detection result (step S22). After the processing of step S22, the control parameter setting processing based on the detection result by the sheet characteristic detection device 2 ends.

According to each Example of the first embodiment described above, the type of the sheet characteristic to be detected by the sheet characteristic detection device 2 is set according to the type of device connected to the sheet characteristic detection device 2. Therefore, as compared with a case where all the sheet characteristics that can be detected by the sheet characteristic detection device 2 are detected, the waiting time and the like at the time of detecting the sheet characteristics can be reduced, so that the productivity of the sheet characteristic detection system can be improved.

### <Second Embodiment>

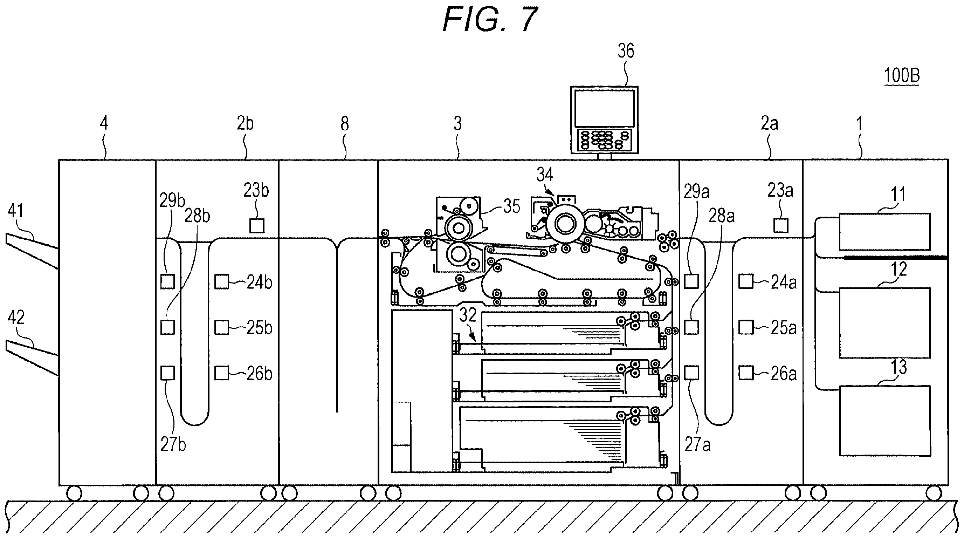

Next, a second embodiment of the present invention will be described. In the second embodiment, an example in which a plurality of sheet characteristic detection devices is included in an image forming system to which the sheet characteristic detection system of the present invention is applied will be described. Fig. 7 is a diagram illustrating a configuration example of an image forming system 100B according to the second embodiment.

In the second embodiment, as illustrated in Fig. 7, the image forming system 100B includes a sheet feeding device 1, a sheet characteristic detection device 2a (an example of a first sheet characteristic detection device), an image forming device 3, a sheet reversing device 8, a sheet characteristic detection device 2b (an example of a second sheet characteristic detection device), and a sheet discharge unit 4. The sheet characteristic detection devices 2a and 2b have functions similar to those of the sheet characteristic detection device 2 in the first embodiment. The sheet reversing device 8 is a device that reverses and outputs the front and back of a sheet on which an image is formed on the front surface by the image forming device 3.

In the image forming system 100B, the first sheet characteristic detection device 2a disposed on the upstream side is connected to a position at the subsequent stage of the sheet feeding device 1 and at the preceding stage of the image forming device 3. Further, the second sheet characteristic detection device 2b disposed on the downstream side is connected to a position at a subsequent stage of the sheet reversing device 8 and at a preceding stage of the sheet discharge unit 4. Also in the present example, the sheet characteristic detection control device of the present invention is applied to the image forming device 3. That is, the setting of the type of sheet characteristics detected by the sheet characteristic detection devices 2a and 2b is performed by the controller 30 (see Fig. 2) of the image forming device 3.

In the present embodiment, the controller 30 of the image forming device 3 causes the first sheet characteristic detection device 2a installed on the upstream side to detect all sheet characteristics as in Example 1 of the first embodiment. Then, the controller 30 generates control parameters of the sheet feeding operation by the sheet feeding device 1 and control parameters of the sheet conveyance operation and the image forming operation by the image forming device 3 on the basis of all the sheet characteristics detected by the sheet characteristic detection device 2a.

The second sheet characteristic detection device 2b installed on the downstream side detects the characteristics of the back surface of the sheet in the back surface characteristic detection mode executed at the time of duplex printing. The back surface characteristic detection mode is a mode executed in a test stage before execution of a print job, and at the time of duplex printing, a sheet on which an image is formed by the image forming device 3 is reversed by the sheet reversing device 8 to be a back surface. Then, the sheet whose back surface is the upper surface is supplied to the sheet characteristic detection device 2b. The sheet after the sheet characteristic detection by the sheet characteristic detection device 2b is discharged to the purge tray 42 of the sheet discharge unit.

In the back surface characteristic detection mode, the controller 30 causes the sheet characteristic detection device 2b to detect only some characteristics affected by the fixing processing of the image forming device 3 among the sheet characteristics that can be detected by the sheet characteristic detection device 2b, for example, the moisture content of the sheet, the sheet resistivity, the sheet size, and the surface property.

Then, the controller 30 generates control parameters for controlling the size of the image formed on the back surface of the sheet by the image forming device 3, the writing position of the image, and the like on the basis of the information of the sheet size detected by the sheet characteristic detection device 2b. In addition, the controller 30 generates control parameters for control such as a transfer current and a fixing temperature at the time of image formation on the back surface by the image forming device 3 on the basis of each piece of information of the moisture content of the sheet, the sheet resistivity, and the surface property detected by the sheet characteristic detection device 2b.

### [Sheet Characteristic Detection Control Processing]

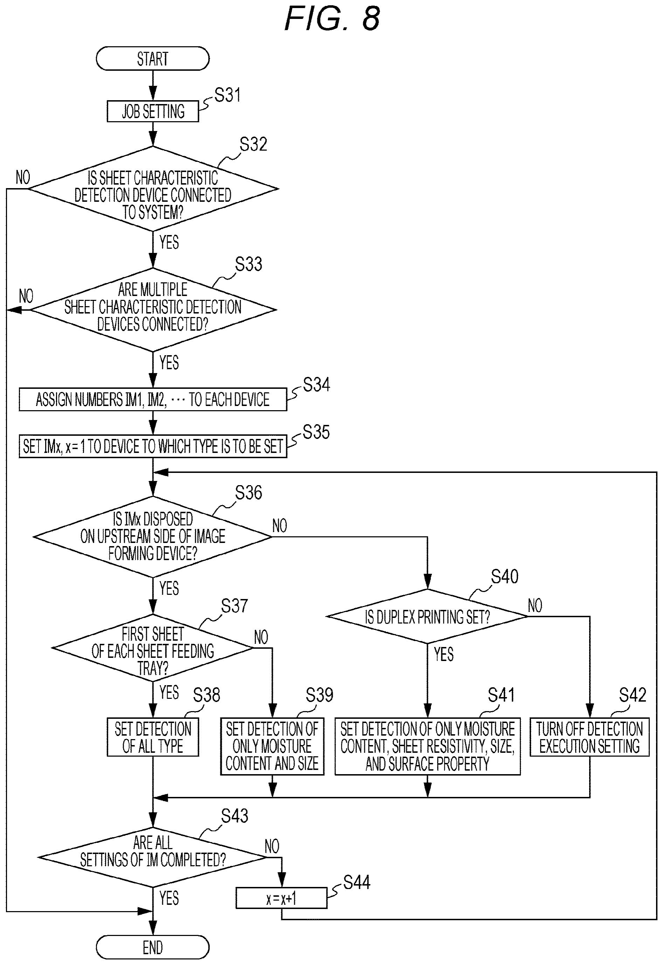

Next, sheet characteristic detection control processing by the image forming system 100B according to the second embodiment will be described with reference to Fig. 8. Fig. 8 is a flowchart illustrating an example of a procedure of sheet characteristic detection setting processing by the controller 30 of the image forming device 3.

First, a job is set on the basis of an operation or the like by a user on a terminal device (not illustrated) (step S31). Next, the controller 30 determines whether the sheet characteristic detection device 2 is connected to the image forming device 3 (step S32). If it is determined in step S32 that the sheet characteristic detection device 2 is not connected (NO in step S32), the sheet characteristic detection setting processing by the controller 30 of the image forming device 3 ends.

On the other hand, when it is determined in step S32 that the sheet characteristic detection device 2 has been connected (YES in step S32), the controller 30 determines whether or not a plurality of sheet characteristic detection devices 2 is connected (step S33). When it is determined in step S33 that a plurality of sheet characteristic detection devices 2 is not connected (NO in step S33), the sheet characteristic detection setting processing by the controller 30 of the image forming device 3 ends. That is, in a case where the number of sheet characteristic detection devices 2 included in the sheet characteristic detection system is one, the processing in the first embodiment described above is performed.

On the other hand, when it is determined in step S33 that a plurality of sheet characteristic detection devices 2 is connected (YES in step S33), the controller 30 assigns a number (IM1, IM2...) to each of the plurality of sheet characteristic detection devices 2 (step S34). The numbers are sequentially assigned in order from the sheet characteristic detection device 2 disposed upstream, for example.

Next, the controller 30 assigns a number of "IMx" to the sheet characteristic detection device 2 as a setting target of the type of the sheet characteristic to be detected (step S35). "1" is set to "x" of "IMx". Next, the controller 30 determines whether or not the disposition position of the sheet characteristic detection device 2 with the number IMx is on the upstream side of the image forming device 3 (step S36).

In a case where it is determined in step S36 that the sheet characteristic detection device 2 is disposed on the upstream side of the image forming device 3 (YES in step S36), the controller 30 determines whether or not the sheet whose sheet characteristic is to be detected is the first sheet fed from each sheet feeding tray (sheet feeding trays 11 to 13: see Fig. 1) storing the sheet to be used in the job (step S37).

In a case where it is determined in step S37 that the sheet is the first sheet fed from the sheet feeding tray (YES in step S37), the controller 30 sets the types of the sheet characteristics detected by the sheet characteristic detection device 2 to all types (step S38). On the other hand, when it is determined in step S37 that the sheet is the second or subsequent sheet fed from the sheet feeding tray (NO in step S37), the controller 30 sets the sheet characteristics detected by the sheet characteristic detection device 2 only to the moisture content of the sheet and the sheet size (step S39).

If it is determined in step S36 that the sheet characteristic detection device 2 is disposed downstream of the image forming device 3 (NO in step S36), the controller 30 determines whether duplex printing is set in the job (step S40). If it is determined in step S40 that duplex printing is set (YES in step S40), the controller 30 sets the sheet characteristics detected by the sheet characteristic detection device 2 only to the moisture content of the sheet, the sheet resistivity, the sheet size, and the surface property (step S41).

On the other hand, when it is determined in step S40 that duplex printing is not set (NO in step S40), the controller 30 turns off the sheet characteristic detection execution setting by the sheet characteristic detection device 2. That is, the sheet characteristic detection device 2 is not caused to execute the sheet characteristic detection processing (step S42).

After the processing of step S38, S39, S41, or S42, the controller 30 determines whether or not the setting of all the sheet characteristic detection devices 2 to which the numbers IMx are assigned has been completed (step S43). If it is determined in step S43 that the settings of all the sheet characteristic detection devices 2 have not been completed (NO in step S43), the controller 30 adds 1 to the value of "x" (step S44). Next, the controller 30 returns to step S36 and makes a determination.

On the other hand, when it is determined in step S43 that the settings of all the sheet characteristic detection devices 2 have been completed (YES in step S43), the sheet characteristic detection setting processing by the controller 30 of the image forming device 3 ends.

### [Sheet Characteristic Detection Control Processing at The Time of Duplex Printing]

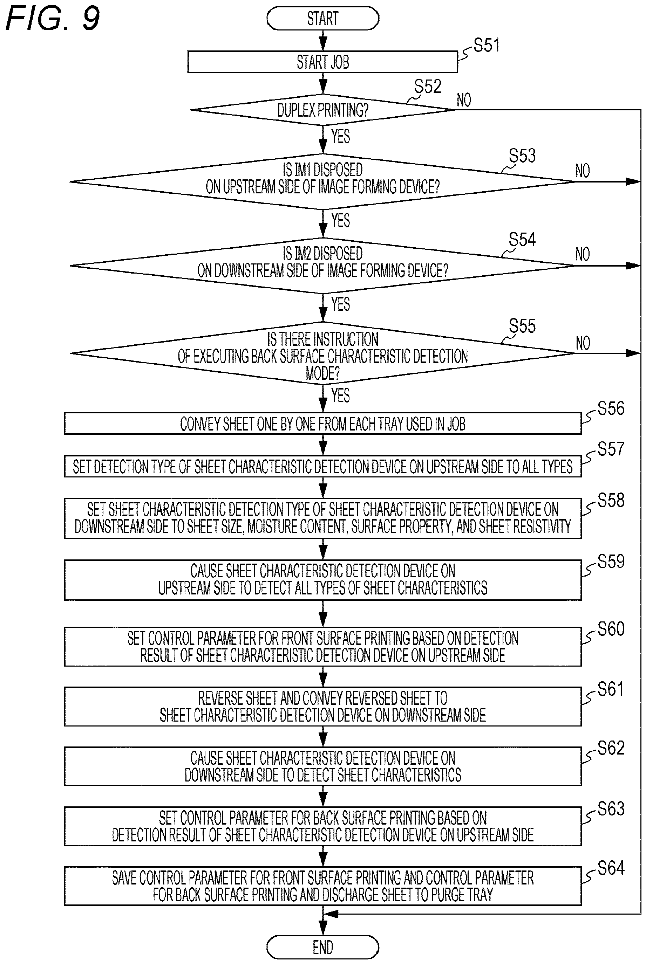

Next, sheet characteristic detection control processing at the time of duplex printing by the image forming system 100B (see Fig. 7) according to the second embodiment will be described with reference to Fig. 9. Fig. 9 is a flowchart illustrating an example of a procedure of sheet characteristic detection control processing at the time of duplex printing by the controller 30 of the image forming device 3 of the image forming system 100B according to the second embodiment.

First, a job is started by the image forming device 3 (step S51). Next, it is determined whether duplex printing is set in the job (step S52). When it is determined in step S52 that duplex printing is not set (NO in step S52), the sheet characteristic detection control processing at the time of duplex printing by the controller 30 ends.

On the other hand, in a case where it is determined in step S52 that duplex printing is set (YES in step S52), the controller 30 determines whether or not the first sheet characteristic detection device 2a (see Fig. 7) to which the number IM1 is assigned is installed on the upstream side of the image forming device 3 (step S53). In step S53, it is determined whether or not the sheet characteristic detection device 2a as a setting target of the detection type of the sheet characteristic is installed on the upstream side of the image forming device 3 as assumed.

When it is determined in step S53 that the first sheet characteristic detection device 2a to which the number IM1 is assigned is not installed on the upstream side of the image forming device 3 (NO in step S53), the sheet characteristic detection control processing at the time of duplex printing by the controller 30 ends.

On the other hand, when it is determined in step S53 that the first sheet characteristic detection device 2a to which the number IM1 is assigned is installed on the upstream side of the image forming device 3 (YES in step S53), the controller 30 determines whether or not the second sheet characteristic detection device 2b (see Fig. 7) to which the number IM2 is assigned is installed on the downstream side of the image forming device 3 (step S54). In step S54, it is determined whether or not the sheet characteristic detection device 2b as a setting target of the detection type of the sheet characteristic is installed on the downstream side of the image forming device 3 as assumed.

When it is determined in step S54 that the second sheet characteristic detection device 2b to which the number IM2 is assigned is not installed on the downstream side of the image forming device 3 (NO in step S54), the sheet characteristic detection control processing at the time of duplex printing by the controller 30 ends.

On the other hand, when it is determined in step S54 that the second sheet characteristic detection device 2b to which the number IM2 is assigned is installed on the downstream side of the image forming device 3 (YES in step S54), the controller 30 determines whether execution of the back surface characteristic detection mode is instructed (step S55). When it is determined in step S55 that the execution of the back surface characteristic detection mode has not been instructed (NO in step S55), the sheet characteristic detection control processing at the time of duplex printing by the controller 30 ends.

On the other hand, in a case where it is determined in step S55 that the execution of the back surface characteristic detection mode is instructed (YES in step S55), the controller 30 performs control to cause the sheet characteristic detection device 2a to convey the sheets one by one in order from each sheet feeding tray (sheet feeding trays 11 to 13, see Fig. 7) storing the sheets to be used in the job (step S56).

Next, the controller 30 sets the types of sheet characteristics detected by the sheet characteristic detection device 2a on the upstream side to all types (step S57). Next, the controller 30 sets the type of the sheet characteristic to be detected by the sheet characteristic detection device 2b installed on the downstream side as a size, a moisture content, a surface property, and sheet resistivity of the sheet (step S58).

Next, the controller 30 performs control to cause the sheet characteristic detection device 2a on the upstream side to detect all types of sheet characteristics (step S59). Next, the controller 30 optimizes or sets a control parameter for surface printing on the basis of the detection result of the sheet characteristics by the sheet characteristic detection device 2a on the upstream side (step S60). After the processing in step S60, printing is performed on the front surface of the sheet by the image forming device 3, and the sheet on which an image is formed on the front surface is conveyed to the sheet reversing device 8.

Next, the controller 30 causes the sheet reversing device 8 to reverse the sheet and conveys the sheet with the back surface turned to the upper surface to the sheet characteristic detection device 2b on the downstream side (step S61). Next, the controller 30 causes the sheet characteristic detection device 2b on the downstream side to detect the sheet characteristics of the type set in step S58 (step S62).

Next, the controller 30 optimizes or sets a control parameter for back surface printing on the basis of the detection result of the sheet characteristics by the sheet characteristic detection device 2b on the downstream side (step S63). Next, the controller 30 stores the control parameter for front surface printing and the control parameter for back surface printing in the storage 31 (see Fig. 2) or the like, and causes the sheet whose sheet characteristic is detected by the sheet characteristic detection device 2b to be discharged from the purge tray 42 of the sheet discharge unit 4 (step S64). After the processing of step S64, the sheet characteristic detection control processing at the time of duplex printing by the controller 30 ends.

According to the second embodiment described above, the type of sheet characteristics detected by the sheet characteristic detection device 2b that detects the sheet characteristics of the back surface is limited to the type necessary for image formation on the back surface of the sheet. Therefore, the waiting time and the like at the time of detecting the sheet characteristics can be reduced as compared with the case where all the sheet characteristics that can be detected by the sheet characteristic detection device 2b are detected as the sheet characteristics of the back surface of the sheet.

### <Third Embodiment>

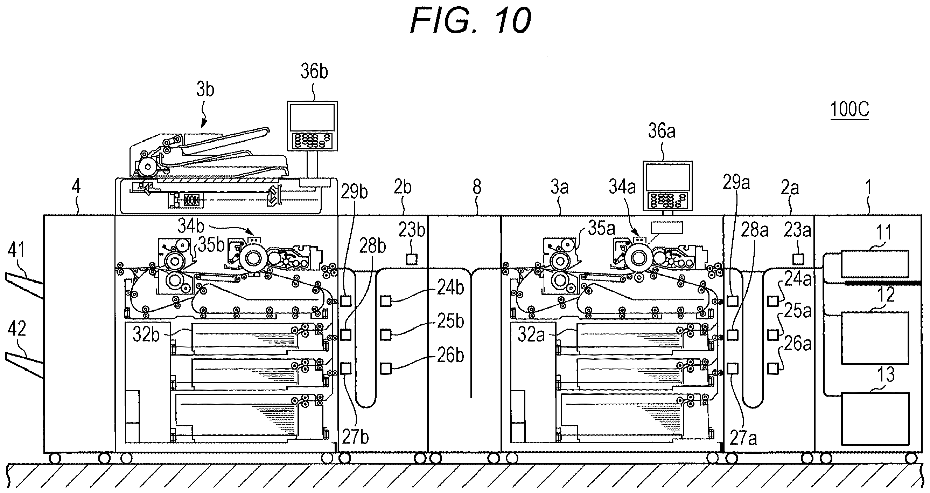

In the third embodiment, an example in which a plurality of image forming devices and a plurality of sheet characteristic detection devices are included in an image forming system to which the sheet characteristic detection system of the present invention is applied will be described. Fig. 10 is a diagram illustrating a configuration example of an image forming system 100C according to Example 1 of the third embodiment.

### [Example 1]

As illustrated in Fig. 10, the image forming system 100C includes a sheet feeding device 1, a sheet characteristic detection device 2a, an image forming device 3a (an example of a first image forming device), a sheet reversing device 8, a sheet characteristic detection device 2b, an image forming device 3b (an example of a second image forming device), and a sheet discharge unit 4. That is, the image forming system 100C is a tandem type image forming system in which two image forming devices 3a and 3b are connected in series. Each of these devices included in the image forming system 100C has been described in each of the above-described embodiments, and thus the description thereof will be omitted here.

Note that a purge unit or the like for adjusting the height of the sheet discharge port of the image forming device 3a at the preceding stage and the height of the sheet feed port of the image forming device 3b at the subsequent stage may be provided between the sheet reversing device 8 and the sheet characteristic detection device 2b in the image forming system 100C.

In the image forming system 100C, the setting of the detection type of the sheet characteristics in the sheet characteristic detection devices 2a and 2b is performed by the controller of the image forming device 3a. That is, in the present example, the sheet characteristic detection control device of the present invention is applied to the image forming device 3a. Note that the setting of the type of sheet characteristics detected by the sheet characteristic detection devices 2a and 2b may be performed by different controllers. For example, the controller 30a of the image forming device 3a may perform the setting of the detection type of the sheet characteristic in the sheet characteristic detection device 2b, and the controller of the image forming device 3a may perform the setting.

As the setting of the type of the sheet characteristic to be detected by the sheet characteristic detection device 2a disposed on the upstream side, the controller 30a of the image forming device 3a performs the same setting as in the first embodiment described above. That is, in a case where the first sheet fed from the sheet feeding tray is to be detected, the controller 30a sets the types of sheet characteristics detected by the sheet characteristic detection device 2a to all types. On the other hand, in a case where the second or subsequent sheet fed from the sheet feeding tray are to be detected, the controller 30a sets the sheet characteristics detected by the sheet characteristic detection device 2a only to the moisture content and the sheet size.

As the type of the sheet characteristic to be detected by the sheet characteristic detection device 2b installed on the downstream side, the controller 30a of the image forming device 3a sets the moisture content of the sheet, the sheet resistivity, the sheet size, and the surface property. That is, the controller 30a causes the sheet characteristic detection device 2b on the downstream side to detect sheet characteristics that change under the influence of the fixing processing by the image forming device 3a on the upstream side.

Then, the controller 30a generates control parameters for optimizing the transfer current and the fixing temperature in the image forming device 3a on the upstream side on the basis of each piece of information of the moisture content, the surface property, and the sheet resistivity of the sheet detected by the sheet characteristic detection device 2a on the upstream side, and transmits the control parameters to the image forming device 3a.

In addition, the controller 30a generates control parameters for optimizing the transfer current and the fixing temperature in the image forming device 3b on the downstream side on the basis of each piece of information of the moisture content, the surface property, and the sheet resistivity of the sheet detected by the sheet characteristic detection device 2b on the downstream side, and transmits the control parameters to the image forming device 3b. Therefore, according to the present example, even in a case where the sheet characteristic detection system of the present invention is applied to an image forming system of a tandem type in series including the two image forming devices 3a and 3b, appropriate image forming processing is executed on the basis of the sheet characteristics detected by each of the sheet characteristic detection devices 2a and 2b.

In addition, the controller 30a corrects the magnification of the image formed on the sheet by the image forming device 3b on the downstream side and the writing position of the image on the basis of the information on the difference between the sheet size detected by the sheet characteristic detection device 2b and the sheet size detected by the sheet characteristic detection device 2a on the upstream side, that is, the sheet size of the sheet before image formation. As a result, it is possible to prevent the magnification or the writing position of the image formed on the front and back of the sheet from being different between the front and back.

Furthermore, according to the present example, it is possible to obtain an effect similar to the effect obtained by each of the above-described embodiments. That is, the waiting time and the like at the time of detecting the sheet characteristics can be reduced as compared with the case where all the sheet characteristics that can be detected by the sheet characteristic detection device 2b are detected.

### [Example 2]

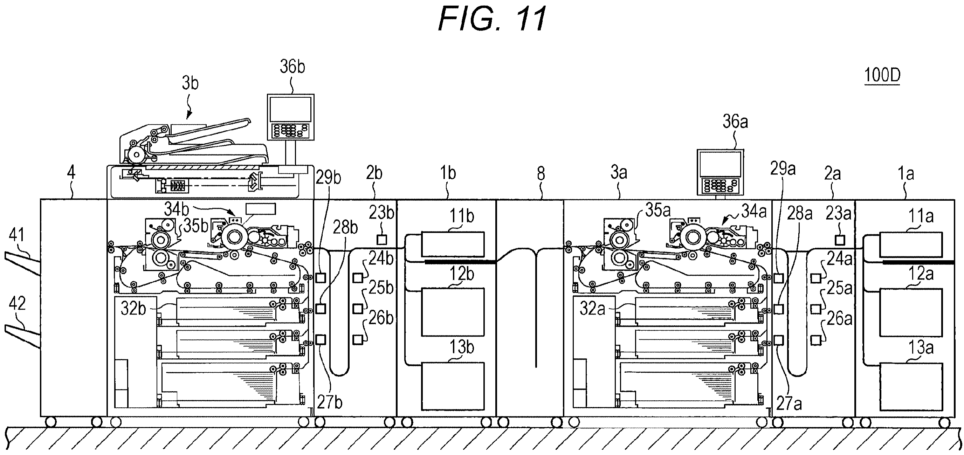

Fig. 11 is a diagram illustrating a configuration example of an image forming system 100D according to Example 2 of the third embodiment. The image forming system 100D illustrated in Fig. 11 is different from the image forming system 100C illustrated in Fig. 10 in that a sheet feeding device 1b is provided in a preceding stage of the image forming device 3b disposed on the downstream side.

As illustrated in Fig. 11, the image forming system 100D includes a sheet feeding device 1a, a sheet characteristic detection device 2a, an image forming device 3a, a sheet reversing device 8, a sheet feeding device 1b, a sheet characteristic detection device 2b, an image forming device 3b, and a sheet discharge unit 4. Since each of these devices included in the image forming system 100D has been described in each of the above-described embodiments, the description thereof will be omitted here.

In the present example, since the sheet feeding device 1b is disposed in front of the image forming device 3b on the downstream side, the image forming device 3b on the downstream side may perform single-sided printing on the sheet fed from the sheet feeding device 1b. In a case where single-sided printing is performed by the image forming device 3b on the downstream side, the controller 30a of the image forming device 3a performs the same setting as in the first embodiment described above as the setting of the type of sheet characteristics detected by the sheet characteristic detection device 2b.

That is, when the first sheet fed from the sheet feeding tray of the sheet feeding device 1b is to be detected, the controller 30a sets the types of the sheet characteristics detected by the sheet characteristic detection device 2b to all types. On the other hand, in a case where the second or subsequent sheet fed from the sheet feeding tray are to be detected, the controller 30a sets the sheet characteristics detected by the sheet characteristic detection device 2b only to the moisture content and the sheet size.

Furthermore, in a case where duplex printing is performed by the image forming device 3a on the upstream side and the image forming device 3b on the downstream side, the same setting as the setting in Example 1 of the third embodiment described with reference to Fig. 10 is performed for each of the sheet characteristic detection device 2a on the upstream side and the sheet characteristic detection device 2b on the downstream side by the controller 30a.

According to Example 2 of the third embodiment described above, even in a case where the sheet feeding device 1b is provided in front of the image forming device 3b on the downstream side in the tandem series image forming system, appropriate image forming processing is executed on the basis of the sheet characteristics detected by each of the sheet characteristic detection devices 2a and 2b. In addition, according to the present example, it is possible to obtain an effect similar to the effect obtained by each embodiment described above. That is, the waiting time and the like at the time of detecting the sheet characteristics can be reduced as compared with the case where all the sheet characteristics that can be detected by the sheet characteristic detection device 2b on the downstream side are detected.

Note that, in the third embodiment, a post-processing device such as the cutter 5 or the folding processing device 6 may be connected to a subsequent stage of the image forming device 3a and/or 3b. In addition, three or more sheet characteristic detection devices 2 and three or more image forming devices 3 may be provided.

### [Sheet Characteristic Detection Control Processing]

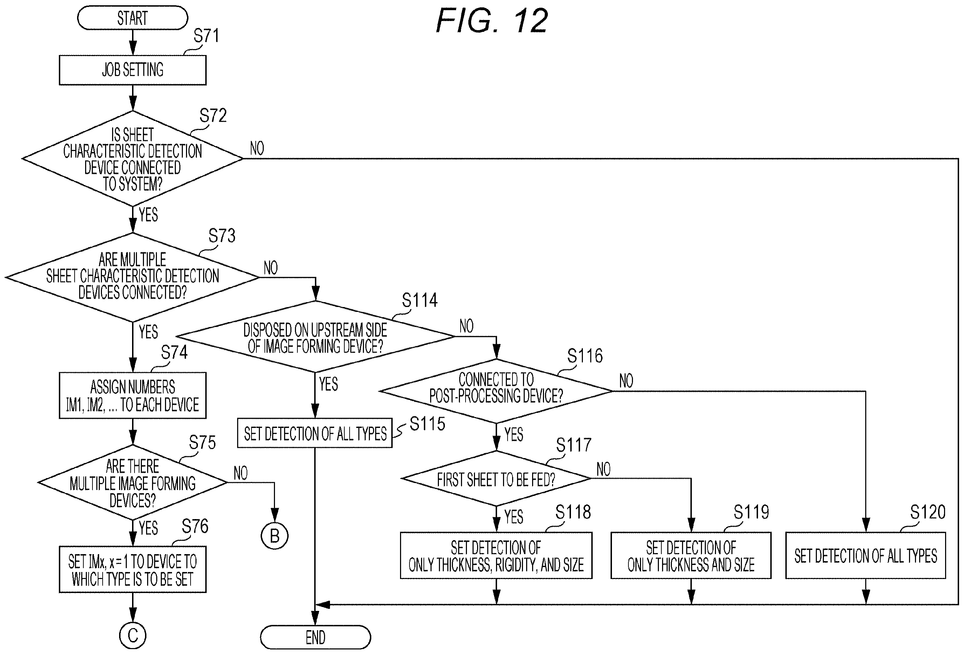

Next, sheet characteristic detection control processing by the image forming system according to the third embodiment will be described with reference to Figs. 12 to 16. Figs. 12 to 16 are flowcharts illustrating an example of a procedure of sheet characteristic detection setting processing by the image forming system according to the third embodiment. In the image forming system that performs the processing illustrated in Figs. 12 to 16, the sheet characteristic detection control processing is performed by the controller 20 (20a or 20b) of the sheet characteristic detection device 2 (2a or 2b).

Note that the image forming system that performs the processing illustrated in Figs. 12 to 16 is not limited to the image forming system of the embodiment illustrated in Example 1 and Example 2 of the third embodiment, and can also be applied to an image forming system of a tandem system in series including a post-processing device and the like.

First, a job is set on the basis of an operation or the like by a user on a terminal device (not illustrated) (step S71). Next, the controller 20 of the sheet characteristic detection device 2 determines whether the own device is connected to the sheet characteristic detection system (step S72). If it is determined in step S72 that there is no connection to the sheet characteristic detection system (NO in step S72), the sheet characteristic detection setting processing by the controller 20 of the sheet characteristic detection device 2 ends.

On the other hand, when it is determined in step S72 that the device is connected to the sheet characteristic detection system (YES in step S72), the controller 20 determines whether a plurality of sheet characteristic detection devices 2 is connected (step S73). If it is determined in step S73 that a plurality of sheet characteristic detection devices 2 is connected (YES in step S73), the controller 20 assigns a number (IM1, IM2...) to each of the plurality of sheet characteristic detection devices 2 (step S74).

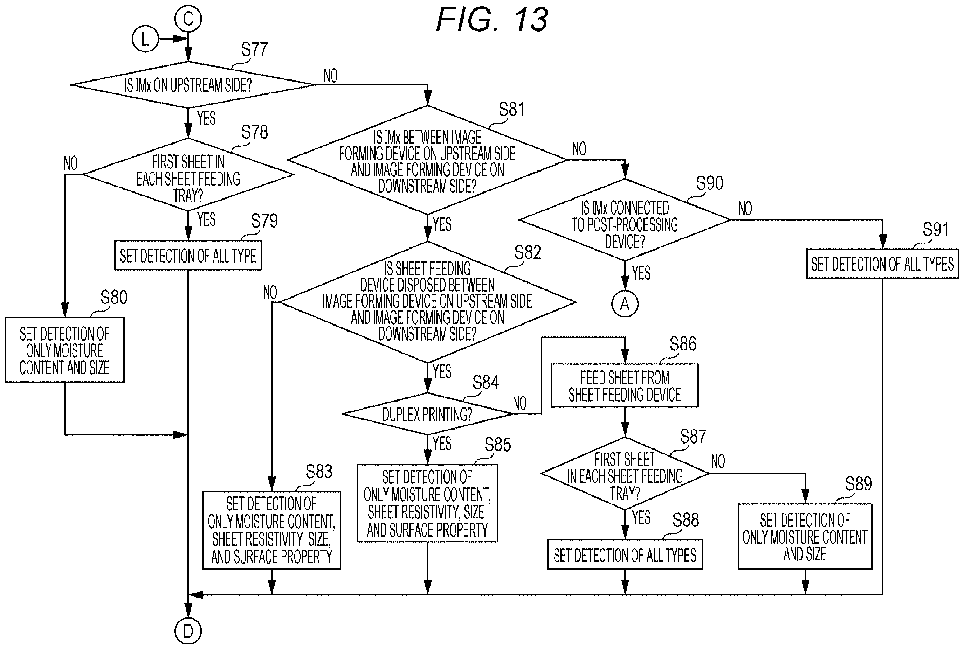

Next, the controller 20 determines whether or not a plurality of image forming devices 3 is connected in the image forming system (step S75). In a case where it is determined in step S75 that a plurality of image forming devices 3 is connected (YES in step S75), the controller 20 assigns a number of "IMx" to the sheet characteristic detection device 2 as a setting target of the type of sheet characteristic to be detected (step S76). "1" is set to "x" of "IMx". Next, the controller 30 determines whether or not the disposition position of the sheet characteristic detection device 2 with the number IMx (x = 1) is on the upstream side of the image forming device 3 (step S77 in Fig. 13).

In a case where it is determined in step S77 that the sheet characteristic detection device 2 is disposed on the upstream side of the image forming device 3 (YES in step S77), the controller 20 determines whether the sheet whose sheet characteristic is to be detected is the first sheet fed from each sheet feeding tray storing the sheet to be used in the job (step S78).

In a case where it is determined in step S78 that the sheet is the first sheet fed from the sheet feeding tray (YES in step S78), the controller 20 sets the types of the sheet characteristics detected by the sheet characteristic detection device 2 to all types (step S79). On the other hand, when it is determined in step S78 that the sheet is the second or subsequent sheet fed from the sheet feeding tray (NO in step S78), the controller 20 sets the sheet characteristics detected by the sheet characteristic detection device 2 only to the moisture content and the sheet size (step S80).

On the other hand, when it is determined in step S77 that the sheet characteristic detection device 2 is not disposed on the upstream side of the image forming device 3, that is, the sheet characteristic detection device 2 is disposed on the downstream side of the image forming device 3 (NO in step S77), the controller 20 determines whether or not the sheet characteristic detection device 2 to which the number IMx is assigned is installed between the image forming device 3 on the upstream side and the image forming device 3 on the downstream side (step S81).

When it is determined in step S81 that the sheet characteristic detection device 2 is installed between the image forming device 3 on the upstream side and the image forming device 3 on the downstream side (YES in step S81), the controller 20 determines whether the sheet feeding device 1 is disposed between the image forming device 3 on the upstream side and the image forming device 3 on the downstream side (step S82). When it is determined in step S82 that the sheet feeding device 1 is not disposed (NO in step S82), the controller 20 sets the sheet characteristics detected by the sheet characteristic detection device 2 only to the moisture content, the sheet resistivity, the sheet size, and the surface property (step S83).

On the other hand, when it is determined in step S82 that the sheet feeding device 1 is disposed between the image forming device 3 on the upstream side and the image forming device 3 on the downstream side (YES in step S82), the controller 20 determines whether duplex printing is set in the job (step S84). If it is determined in step S84 that duplex printing is set (YES in step S84), the controller 20 sets the sheet characteristics detected by the sheet characteristic detection device 2 only to the moisture content, the sheet resistivity, the sheet size, and the surface property (step S85).

On the other hand, when it is determined in step S84 that duplex printing is not set (NO in step S84), the controller 20 causes the image forming device 3 on the downstream side to feed sheet from the sheet feeding device 1 disposed between the image forming device 3 on the upstream side and the image forming device 3 on the downstream side (step S86).

Next, the controller 20 determines whether the sheet whose sheet characteristic is to be detected is the first sheet fed from each sheet feeding tray storing the sheet to be used in the job (step S87). In a case where it is determined in step S87 that the sheet is the first sheet fed from the sheet feeding tray (YES in step S87), the controller 20 sets the types of the sheet characteristics detected by the sheet characteristic detection device 2 to all types (step S88). On the other hand, when it is determined in step S87 that the sheet is the second or subsequent sheet fed from the sheet feeding tray (NO in step S87), the controller 20 sets the sheet characteristics detected by the sheet characteristic detection device 2 only to the moisture content and the sheet size (step S89).

If it is determined in step S81 that the sheet characteristic detection device 2 is not installed between the image forming device 3 on the upstream side and the image forming device 3 on the downstream side (NO in step S81), the controller 20 determines whether a post-processing device is connected to the sheet characteristic detection device 2 to which the number IMx is assigned (step S90). If it is determined in step S90 that the device is not connected to the post-processing device (NO in step S90), the controller 20 sets the sheet characteristics detected by the sheet characteristic detection device 2 to all types (step S91).

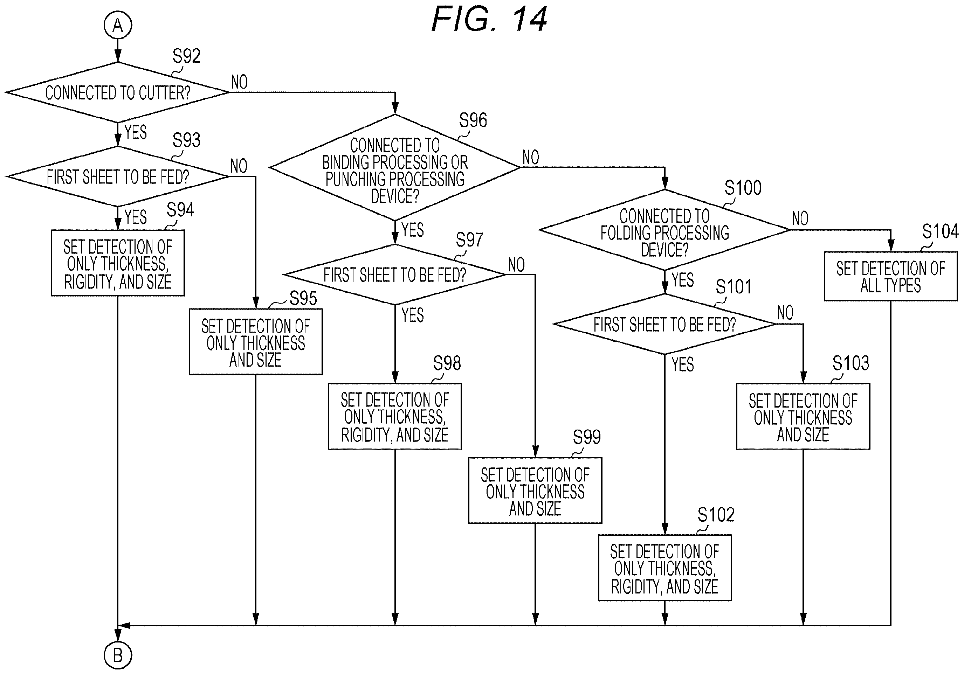

In a case where it is determined in step S90 that the post-processing device is connected to the sheet characteristic detection device 2 to which the number IMx is assigned (YES in step S90), the controller 20 performs processing of steps S92 to S104 of Fig. 14. Since the processing of steps S92 to S104 of Fig. 14 is the same as the processing of steps S7 to S19 of Fig. 5, the description thereof will be omitted here.

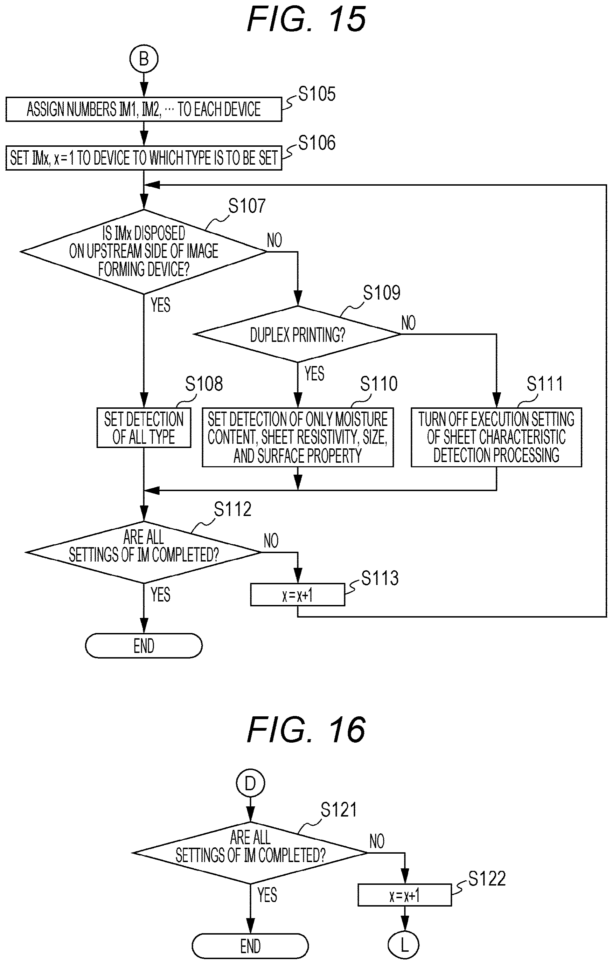

When it is determined in step S75 of Fig. 12 that the plurality of image forming devices 3 is not connected (NO in step S75), the controller 20 assigns a number (IM1, IM2...) to each of the plurality of sheet characteristic detection devices 2 (step S105 of Fig. 15). Next, the controller 20 assigns a number of "IMx" to the sheet characteristic detection device 2 as a setting target of the type of the sheet characteristic to be detected (step S106). "1" is set to "x" of "IMx". Next, the controller 30 determines whether or not the disposition position of the sheet characteristic detection device 2 with the number IMx is on the upstream side of the image forming device 3 (step S107).

When it is determined in step S107 that the sheet characteristic detection device 2 is disposed on the upstream side of the image forming device 3 (YES in step S107), the controller 20 sets all types of sheet characteristics detected by the sheet characteristic detection device 2 (step S108).

On the other hand, when it is determined in step S107 that the sheet characteristic detection device 2 is not disposed on the upstream side of the image forming device 3, that is, is disposed on the downstream side (NO in step S107), the controller 20 determines whether duplex printing is set in the job (step S109). If it is determined in step S109 that duplex printing is set (YES in step S109), the controller 20 sets the sheet characteristics detected by the sheet characteristic detection device 2 only to the moisture content, the sheet resistivity, the sheet size, and the surface property (step S110).

On the other hand, when it is determined in step S109 that duplex printing is not set (NO in step S109), the controller 20 turns off the execution setting of the sheet characteristic detection processing by the sheet characteristic detection device 2. That is, the sheet characteristic detection processing is not executed (step S111).

After the processing of step S108, S110, or S111, the controller 20 determines whether or not the setting of all the sheet characteristic detection devices 2 has been completed (step S112). If it is determined in step S112 that the settings of all the sheet characteristic detection devices 2 have not been completed (NO in step S112), the controller 20 adds 1 to the value of "x" of the number Imx (step S113). After the processing of step S113, the controller 20 returns to step S107 and performs determination.

On the other hand, when it is determined in step S 112 that the settings of all the sheet characteristic detection devices 2 have been completed (YES in step S112), the sheet characteristic detection setting processing by the controller 20 of the sheet characteristic detection device 2 ends.

If it is determined in step S73 of Fig. 12 that a plurality of sheet characteristic detection devices 2 is not connected (NO in step S73), the controller 20 determines whether or not the sheet characteristic detection device 2 numbered IMx is disposed upstream of the image forming device 3 (step S114).

In a case where it is determined in step S114 that the sheet characteristic detection device 2 is disposed on the upstream side of the image forming device 3 (YES in step S114), the controller 20 sets the types of the sheet characteristics detected by the sheet characteristic detection device 2 to all types (step S115). On the other hand, when it is determined in step S114 that the sheet characteristic detection device 2 is disposed on the downstream side of the image forming device 3 (NO in step S114), the controller 20 determines whether the post-processing device is connected to the sheet characteristic detection device 2 numbered IMx (step S116).

In a case where it is determined in step S116 that the post-processing device is connected (YES in step S116), the controller 20 determines whether or not the sheet whose sheet characteristic is to be detected is the first sheet fed from each sheet feeding tray storing the sheet to be used in the job (step S 117). When it is determined in step S 117 that the sheet is the first sheet fed from the sheet feeding tray (YES in step S 117), the controller 20 sets the type of the sheet characteristic to be detected by the sheet characteristic detection device 2 to the thickness, the rigidity, and the sheet size of the sheet (step S118).

On the other hand, when it is determined in step S117 that the sheet is the second or subsequent sheet fed from the sheet feeding tray (NO in step S117), the controller 20 sets the sheet characteristics detected by the sheet characteristic detection device 2 only to the thickness and the sheet size of the sheet (step S119). On the other hand, when it is determined in step S116 that the post-processing device is not connected to the sheet characteristic detection device 2 (NO in step S 116), the controller 20 sets the sheet characteristics detected by the sheet characteristic detection device 2 to all types (step S120). After the processing of step S115, S118, S119, or S120, the sheet characteristic detection setting processing by the controller 20 of the sheet characteristic detection device 2 ends.

After the processing in steps S80, S83, S85, S88, and S89 in Fig. 13 and steps S94, S95, S98, S99, S102, S103, and S104 in Fig. 14, the controller 20 determines whether or not the setting of all the sheet characteristic detection devices 2 has been completed (step S121 in Fig. 16). If it is determined in step S121 that the settings of all the sheet characteristic detection devices 2 have not been completed (NO in step S121), the controller 20 adds 1 to the value of "x" of the number Imx (step S122). After the processing in step S122, the controller 20 returns to step S77 in Fig. 13 and makes a determination.

On the other hand, when it is determined in step S121 that the settings of all the sheet characteristic detection devices 2 have been completed (YES in step S121), the sheet characteristic detection setting processing by the controller 20 of the sheet characteristic detection device 2 ends.

Note that, in each of the above-described embodiments, an example has been described in which various media sensors that detect sheet characteristics are provided in the sheet characteristic detection device 2, but the present invention is not limited thereto. A sheet characteristic detection unit including various media sensors may be provided in another device included in the sheet characteristic detection system.

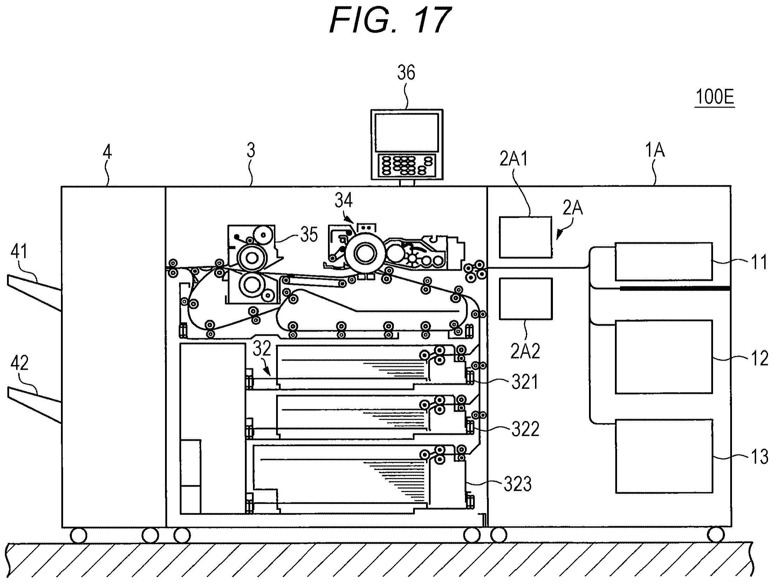

Fig. 17 is a diagram illustrating a configuration example of an image forming system 100E including the sheet feeding device 1A incorporating the sheet characteristic detection unit 2A. The sheet characteristic detection unit 2A in the sheet feeding device 1A illustrated in Fig. 17 includes the respective media sensors of the sheet size detection sensor 23, the sheet thickness detection sensor 24, the moisture content detection sensor 25, the basis weight detection sensor 26, the rigidity detection sensor 27, the surface property detection sensor 28, and the sheet resistivity detection sensor 29 described with reference to Fig. 2.

Then, a controller (not illustrated) in the sheet characteristic detection unit 2A causes a media sensor that detects sheet characteristics necessary for a device connected to a subsequent stage to detect the sheet characteristics. In the image forming system 100E illustrated in Fig. 17, since the image forming device 3 is disposed at the subsequent stage of the sheet feeding device 1A including the sheet characteristic detection unit 2A, the controller causes each of all the media sensors to detect each sheet characteristic similarly to the first embodiment.

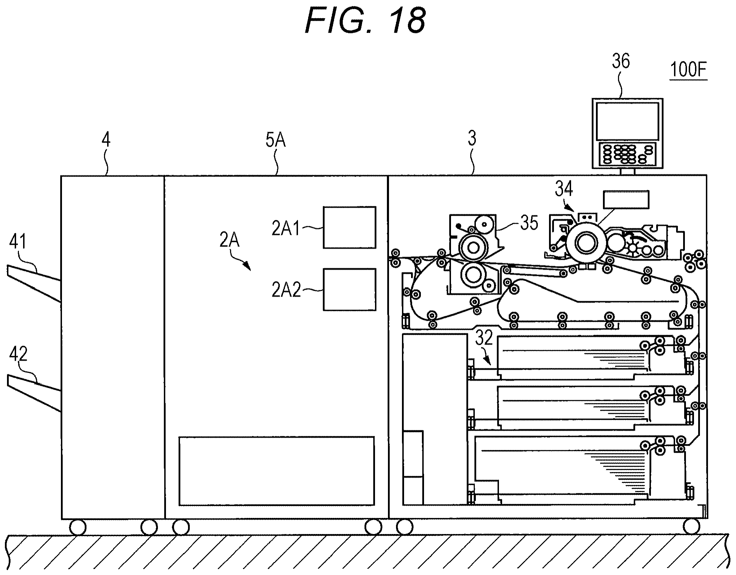

Fig. 18 is a diagram illustrating a configuration example of an image forming system 100F including a cutter 5A incorporating a sheet characteristic detection unit 2A. The sheet characteristic detection unit 2A in the cutter 5A illustrated in Fig. 18 also includes a sheet size detection sensor 23, a sheet thickness detection sensor 24, a moisture content detection sensor 25, a basis weight detection sensor 26, a rigidity detection sensor 27, a surface property detection sensor 28, and a sheet resistivity detection sensor 29 (not illustrated).

Then, a controller (not illustrated) in the sheet characteristic detection unit 2A of the image forming system 100F causes a media sensor that detects sheet characteristics necessary for a device connected at a subsequent stage to detect the sheet characteristics. In the image forming system 100F illustrated in Fig. 18, since the cutter 5A including the sheet characteristic detection unit 2A is disposed at the subsequent stage of the image forming device 3, the controller performs control to detect the thickness, the rigidity, and the size of the sheet similarly to Example 2 of the first embodiment.

Note that, in the above-described embodiment, an example has been described in which the controller in the device functioning as the sheet characteristic detection control device detects the connection state of each device in the system, and changes the type of the sheet characteristic to be detected on the basis of the type of the connected device and the positional relationship with the device. However, the present invention is not limited thereto.

For example, the controller may perform control to change the type of sheet characteristics to be detected according to the setting content set in the job. The setting content referred to by the controller includes, for example, setting of single-side or duplex printing, setting of post-processing functions such as cutting and folding processing, and the like. Alternatively, these various setting contents may be directly set as parameters to a device functioning as the sheet characteristic detection control device.

Furthermore, in each of the above-described embodiments, an example has been described in which each media sensor included in the sheet characteristic detection device 2 or the sheet characteristic detection unit 2A detects different sheet characteristics, but the present invention is not limited thereto, and one media sensor may detect a plurality of different sheet characteristics. Alternatively, one media sensor may detect different types of information in one sheet characteristic by making a detection range, detection processing, or the like on the sheet different.

For example, the detection position (the number of times of detection) on the same sheet can be changed as the detection range of the sheet characteristic. In addition, processing with a large calculation load or processing with a small calculation load can be selected as the detection processing. For example, in a specific detection range or detection processing, the sheet characteristics can be detected with specific accuracy, and in other detection ranges or detection processing, productivity can be prioritized by making the detection accuracy of the sheet characteristics lower or rougher than the accuracy in the specific detection range or detection processing.

Further, in the embodiment described above, an example has been described in which the sheet whose sheet characteristic is detected by the sheet characteristic detection device 2 (see Fig. 1 and the like) is conveyed to the image forming device 3, but the present invention is not limited thereto. For example, the sheet characteristic detection device 2 may be configured to discharge the sheet after detecting the specific sheet characteristics from the sheet characteristic detection device 2 without conveying the sheet to the image forming device 3.

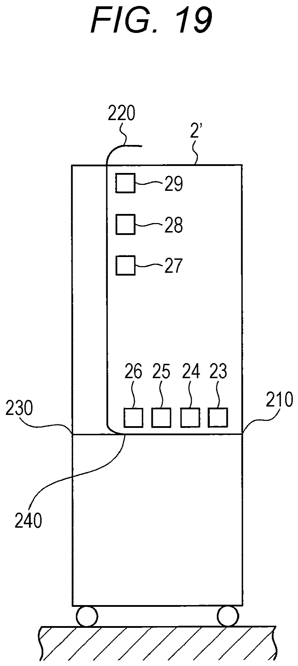

Fig. 19 is a diagram illustrating a configuration example of a sheet characteristic detection device 2' according to a modification. The sheet characteristic detection device 2' illustrated in Fig. 19 has a first conveyance path and a second conveyance path. The first conveyance path is a path that connects a first sheet feed port 210 to which a sheet conveyed from the sheet feeding device 1 (not illustrated in Fig. 19) is fed and a sheet discharger 220 that discharges a sheet from the sheet characteristic detection device 2'.

The second conveyance path is a path formed in a horizontal direction in the device that connects the first sheet feed port 210 and the second sheet feed port 230 that conveys a sheet to the image forming device 3 (not illustrated in Fig. 19). The first conveyance path and the second conveyance path branch at a branch portion 240.

As illustrated in Fig. 19, the sheet size detection sensor 23, the sheet thickness detection sensor 24, the moisture content detection sensor 25, and the basis weight detection sensor 26 are disposed side by side at positions up to the branch portion 240 in the first conveyance path. On the other hand, the rigidity detection sensor 27, the surface property detection sensor 28, and the sheet resistivity detection sensor 29 are disposed side by side in the vertical direction at positions from the branch portion 240 to the sheet discharger 220.

With such a configuration of the sheet characteristic detection device 2', the type of sheet characteristic to be detected for the sheet to be conveyed to the image forming device 3, that is, to be subjected to image formation can be limited to any one or more of the sheet size, the sheet thickness, the moisture content, and the basis weight. Therefore, according to the modification, the time until completion of printing by the image forming device 3 at the time of executing a normal job can be shortened, and productivity can be improved.

Further, by forming the first conveyance path on which the sheet to be conveyed to the image forming device 3 is conveyed substantially straight in the horizontal direction as illustrated in Fig. 19, it is possible to stably convey a sheet such as a thick sheet. Furthermore, as compared with the configuration in which the conveyance path is curved, the conveyance time of the sheet at the time of detecting the sheet characteristic can be shortened, and the productivity can be improved.

Furthermore, in the present specification, "enabling change of the type of sheet characteristics detected by a plurality of media sensors" includes, for example, the following aspects (A) and (B).
(A) In a certain condition α, all the media sensors among the plurality of media sensors detect each sheet characteristic, but in another condition β, among the plurality of media sensors, some media sensors detect the sheet characteristic, while other media sensors do not detect the sheet characteristic.
(B) In a certain condition α, the sheet characteristics are detected by some of the plurality of media sensors or a single media sensor A, and in another condition β, the sheet characteristics are detected by other media sensors (including both a case where the media sensor partially overlap with those in the condition α and a case where the media sensor does not overlap with those in the condition α) or another single media sensor B among the plurality of media sensors.

Note that "the media sensor does not detect sheet characteristics" includes any of the following aspects (1) and (2).
(1) The media sensor does not detect sheet characteristics at all.
(2) The media sensor detects the sheet characteristics, but the detected detection data is not used.

Specific examples of the above aspect (A) include the following (A-1) and (A-2).
(A-1) Under the condition of the first sheet of the print job, the sheet characteristics are detected by all the media sensors, but under the condition of the second or subsequent sheet, the sheet characteristics are detected by only some of the media sensors.
(A-2) Under the condition of the first sheet after the change of the sheet, the sheet characteristics are detected by all the media sensors, but under the condition of the second or subsequent sheet, the sheet characteristics are detected by only some of the media sensors. Note that the sheet change may be performed by information input of the sheet change by the user, or may be detected on the basis of a detection result of opening and closing of the sheet tray, or the like.

As another specific example of another mode of the above aspect (A), the media sensor that does not detect the sheet characteristic under the condition β is preferably at least one of the rigidity detection sensor 27, the surface property detection sensor 28, and the sheet resistivity detection sensor 29. Furthermore, the media sensor that detects the sheet characteristics under the condition β is preferably at least one of the sheet size detection sensor 23, the sheet thickness detection sensor 24, the moisture content detection sensor 25, and the basis weight detection sensor 26.

In addition, each of the above-described embodiments or modifications describes the configuration of the device and the system in detail and specifically in order to describe the present invention in an easy-to-understand manner, and is not necessarily limited to those having all the described configurations.

In addition, control lines or information lines indicated by solid lines in Fig. 2 indicate what is considered to be necessary for the description, and do not necessarily indicate all control lines or information lines on a product. In practice, it may be considered that almost all the configurations are connected to each other.

Furthermore, in the present specification, the processing steps describing the time-series processing include not only processing performed in time series according to the described order, but also processing executed in parallel or individually (For example, parallel processing or processing by an object) even if the processing is not necessarily performed in time series.

Although embodiments of the present invention have been described and illustrated in detail, the disclosed embodiments are made for purposes of illustration and example only and not limitation. The scope of the present invention should be interpreted by terms of the appended claims.
Note that the present technology may be configured as follows:
(1) A sheet characteristic detection system that detects a sheet characteristic, comprising: a sheet characteristic detection device 2 that includes a plurality of media sensors corresponding to a plurality of different sheet characteristics; and a controller 20, 30 that is capable of changing a type of the sheet characteristic to be detected by the plurality of media sensors.
(2) The sheet characteristic detection system according to (1), wherein the controller 20, 30 can change a combination of the sheet characteristics to be detected by the plurality of media sensors.
(3) The sheet characteristic detection system according to (1), wherein the plurality of media sensors are capable of detecting information corresponding to a plurality of sheet characteristics among a size, rigidity, resistance, a moisture content, a surface property, and a thickness of the sheet.
(4) The sheet characteristic detection system according to claim 1, wherein the controller 20, 30 changes a type of the sheet characteristic to be detected according to a selected function.
(5) The sheet characteristic detection system according to (4), wherein the controller 20, 30 changes the type of the sheet characteristic to be detected according to a type of a post-processing function set in a job.
(6) The sheet characteristic detection system according to (1), wherein the controller 20, 30 changes the type of the sheet characteristic detected by the plurality of media sensors according to at least one of: a type of a device connected to the sheet characteristic detection device 2 in the sheet characteristic detection system; and a connection position of the sheet characteristic detection device 2 in the sheet characteristic detection system.
(7) The sheet characteristic detection system according to (1), wherein the controller 20, 30 changes a type of the sheet characteristic to be detected by the plurality of media sensors according to a type of a post-processing device connected to the sheet characteristic detection device 2.
(8) The sheet characteristic detection system according to (7), wherein the controller 20, 30 causes the media sensor to detect at least one of a size, rigidity, and a thickness of the sheet when the sheet characteristic detection device 2 is connected to a cutter that cuts the sheet.
(9) The sheet characteristic detection system according to (8), wherein the controller 20, 30 adjusts at least one of a cutting position and a cutting time of the sheet in the cutter based on a detection result of the sheet characteristic detection device 2.
(10) The sheet characteristic detection system according to (7), wherein the controller 20, 30 causes the media sensor to detect at least one of rigidity, a thickness, and a moisture content of the sheet when the sheet characteristic detection device 2 is connected to a device capable of performing binding processing or punching processing.
(11) The sheet characteristic detection system according to (7), wherein the controller 20, 30 causes the media sensor to detect at least one of rigidity, a thickness, and a moisture content of the sheet when the sheet characteristic detection device 2 is connected to a folding processing device.
(12) The sheet characteristic detection system according to claim 1, wherein the controller 20, 30 causes the media sensor to detect information corresponding to at least two or more sheet characteristics among a size, rigidity, resistance, a moisture content, a surface property, and a thickness of the sheet when the sheet characteristic detecting device is connected to an image forming device 3.
(13) The sheet characteristic detection system according to claim 1, wherein the controller 20, 30 causes the media sensor to detect information corresponding to a moisture content of the sheet and information corresponding to at least one of a size, rigidity, resistance, a surface property, and a thickness of the sheet when the sheet characteristic detection device 2 is connected to an image forming device 3.
(14) The sheet characteristic detection system according to claim 1, wherein the controller 20, 30 changes a type of the sheet characteristic to be detected by the plurality of media sensors between a case where the sheet characteristic detection device 2 is connected to an upstream side of an image forming device 3 and a case where the sheet characteristic detection device 2 is connected to a downstream side of the image forming device 3 in the sheet characteristic detection system including the image forming device 3.
(15) The sheet characteristic detection system according to claim 14, wherein when the sheet characteristic detection device 2 is connected to the upstream side of the image forming device 3 in the sheet characteristic detection system including the image forming device 3, the controller 20, 30 causes the media sensor to detect at least one of a size, rigidity, resistance, a moisture content, a surface property, and a thickness of the sheet.
(16) The sheet characteristic detection system according to (14), wherein when the sheet characteristic detection device 2 is connected to the downstream side of the image forming device 3 in the sheet characteristic detection system including the image forming device 3, the controller 20, 30 causes the media sensor to detect at least one of a size, rigidity, and a moisture content of the sheet.
(17) The sheet characteristic detection system according to (14), wherein when the sheet characteristic detection device 2 is connected between a first image forming device 3 disposed on an upstream side in a sheet conveyance direction and a second image forming device 3 disposed on a downstream side in the sheet conveyance direction, the controller 20, 30 causes the media sensor to detect at least one of a size, resistance, a moisture content, and a surface property of the sheet.
(18) The sheet characteristic detection system according to (1), wherein when a first sheet characteristic detection device 2 is disposed on an upstream side of a first image forming device 3 disposed on an upstream side in the sheet characteristic detection system, and a second sheet characteristic detection device 2 is disposed between the first image forming device 3 and a second image forming device 3 disposed on a downstream side of the first image forming device 3, the controller 20, 30 changes a type of the sheet characteristic to be detected between the first sheet characteristic detection device 2 and the second sheet characteristic detection device 2.
(19) The sheet characteristic detection system according to (18), wherein the controller 20, 30 determines an image forming position or a magnification of an image by the second image forming device 3 based on each sheet size detected by each of the first sheet characteristic detection device 2 and the second sheet characteristic detection device 2, and determines a transfer condition or a fixing condition of the second image forming device 3 based on at least one of resistance, a moisture content, and a surface property of the sheet detected by the second sheet characteristic detection device 2.
(20) The sheet characteristic detection system according to (18), wherein the first image forming device 3 forms an image on a first surface of the sheet, and the second image forming device 3 forms an image on a second surface different from the first surface of the sheet, thereby forming images on both sides of the sheet.
(21) The sheet characteristic detection system according to (1), wherein when the sheet characteristic detection device 2 is connected between a first image forming device 3 disposed on an upstream side in a sheet conveyance direction and a second image forming device 3 disposed on a downstream side in the sheet conveyance direction, the controller 20, 30 changes a type of the sheet characteristic to be detected according to whether or not a sheet feeding device that houses sheets is connected between the first image forming device 3 and the second image forming device 3.
(22) The sheet characteristic detection system according to (1), wherein when the sheet characteristic detection device 2 is disposed in a sheet characteristic detection system including a first image forming device 3 and a second image forming device 3, the controller 20, 30 changes a type of the sheet characteristic to be detected based on information on whether to form an image only on one side of the sheet or to form an image on both sides of the sheet.
(23) The sheet characteristic detection system according to (1), wherein the controller 20, 30 changes a type of the sheet characteristic to be detected according to whether the sheet fed from the sheet feeding device is a first sheet or a second or subsequent sheet fed in a job.
(24) The sheet characteristic detection system according to (23), wherein the controller 20, 30 detects all types of sheet characteristics corresponding to the plurality of media sensors when the sheet fed is the first sheet, and detects only some types of sheet characteristics when the sheet fed is the second or subsequent sheet.
(25) A sheet characteristic detection system that detects a sheet characteristic, comprising: a sheet characteristic detection device 2 that includes a media sensor capable of detecting information corresponding to the sheet characteristic; and a controller 20, 30 that determines a detection content of the sheet characteristic detected by the media sensor according to at least one of a type of a device connected to the sheet characteristic detection device 2 in the sheet characteristic detection system, a connection position of the sheet characteristic detection device 2 in the sheet characteristic detection system, and a selected function.
(26) The sheet characteristic detection system according to (25), wherein the controller 20, 30 can determine a type of the sheet characteristic to be detected, a detection range of the sheet characteristic to be detected, or detection processing as the detection content of the sheet characteristic.
(27) The sheet characteristic detection system according to (25), wherein the sheet characteristic detection device 2 includes a plurality of media sensors corresponding to a plurality of different sheet characteristics, and the controller 20, 30 is capable of changing a type of the sheet characteristic to be detected.
(28) The sheet characteristic detection system according to (27), wherein the controller 20, 30 is capable of changing a combination of the sheet characteristics to be detected by the plurality of media sensors.
(29) The sheet characteristic detection system according to (25), wherein a device connected to the sheet characteristic detection device 2 is a device in which the media sensor included in the sheet characteristic detection device 2 can be disposed.
(30) A sheet characteristic detection control device for detecting a sheet characteristic by a sheet characteristic detection device 2 including a media sensor, wherein the sheet characteristic detection device 2 includes a plurality of media sensors corresponding to a plurality of different sheet characteristics, and a controller 20, 30 that is capable of changing a type of the sheet characteristic to be detected by the plurality of media sensors.
(31) A sheet characteristic detection control device for detecting a sheet characteristic by a sheet characteristic detection device 2 including a media sensor, comprising a controller 20, 30 that determines a detection content of a sheet characteristic to be detected by the sheet characteristic detection device 2 according to at least one of a device connected to the sheet characteristic detection device 2, a connection position of the sheet characteristic detection device 2 in a system, and a selected function.
(32) A sheet characteristic detection control program for detecting a sheet characteristic by a sheet characteristic detection device 2 including a media sensor, comprising determining a type of the sheet characteristic to be detected by a plurality of media sensors included in the sheet characteristic detection device 2, wherein the type of the sheet characteristic determined in the determining can be changed.
(33) A sheet characteristic detection control program for detecting a sheet characteristic by a sheet characteristic detection device 2 including a media sensor, comprising determining a detection content of a sheet characteristic to be detected by the sheet characteristic detection device 2 according to at least one of a device connected to the sheet characteristic detection device 2, a connection position of the sheet characteristic detection device 2 in a system, and a selected function.
(34) An image forming system 100 comprising: an image forming device 3 that forms an image on a sheet; and a sheet characteristic detection device 2 that detects a sheet characteristic, wherein the sheet characteristic detection device 2 includes: a sheet characteristic detection device 2 that includes a plurality of media sensors corresponding to a plurality of different sheet characteristics; and a controller 20, 30 that is capable of changing a type of the sheet characteristic to be detected by the plurality of media sensors.

## Claims

1. A sheet characteristic detection system that detects a sheet characteristic, comprising:
a sheet characteristic detection device (2) that includes a plurality of media sensors corresponding to a plurality of different sheet characteristics; and
a controller (20, 30) that is capable of changing a type of the sheet characteristic to be detected by the plurality of media sensors.

2. The sheet characteristic detection system according to claim 1, wherein
the controller (20, 30) can change a combination of the sheet characteristics to be detected by the plurality of media sensors.

3. The sheet characteristic detection system according to claim 1, wherein
the plurality of media sensors are capable of detecting information corresponding to a plurality of sheet characteristics among a size, rigidity, resistance, a moisture content, a surface property, and a thickness of the sheet.

4. The sheet characteristic detection system according to claim 1, wherein
the controller (20, 30) changes a type of the sheet characteristic to be detected according to a selected function, and/or according to a type of a post-processing function set in a job, or wherein
the controller (20, 30) changes the type of the sheet characteristic detected by the plurality of media sensors according to at least one of: a type of a device connected to the sheet characteristic detection device (2) in the sheet characteristic detection system; and a connection position of the sheet characteristic detection device (2) in the sheet characteristic detection system, or wherein
the controller (20, 30) changes a type of the sheet characteristic to be detected by the plurality of media sensors according to a type of a post-processing device connected to the sheet characteristic detection device (2).

5. The sheet characteristic detection system according to claim 4, wherein
the controller (20, 30) causes the media sensor to detect at least one of a size, rigidity, and a thickness of the sheet when the sheet characteristic detection device (2) is connected to a cutter that cuts the sheet.

6. The sheet characteristic detection system according to claim 5, wherein
the controller (20, 30) adjusts at least one of a cutting position and a cutting time of the sheet in the cutter based on a detection result of the sheet characteristic detection device (2).

7. The sheet characteristic detection system according to claim 4, wherein
the controller (20, 30) causes the media sensor
to detect at least one of rigidity, a thickness, and a moisture content of the sheet when the sheet characteristic detection device (2) is connected to a device capable of performing binding processing or punching processing, or,
to detect at least one of rigidity, a thickness, and a moisture content of the sheet when the sheet characteristic detection device (2) is connected to a folding processing device, or
to detect information corresponding to at least two or more sheet characteristics among a size, rigidity, resistance, a moisture content, a surface property, and a thickness of the sheet when the sheet characteristic detecting device is connected to an image forming device (3), or
to detect information corresponding to a moisture content of the sheet and information corresponding to at least one of a size, rigidity, resistance, a surface property, and a thickness of the sheet when the sheet characteristic detection device (2) is connected to an image forming device (3).

8. The sheet characteristic detection system according to claim 1, wherein
the controller (20, 30) changes a type of the sheet characteristic to be detected by the plurality of media sensors between a case where the sheet characteristic detection device (2) is connected to an upstream side of an image forming device (3) and a case where the sheet characteristic detection device (2) is connected to a downstream side of the image forming device (3) in the sheet characteristic detection system including the image forming device (3).

9. The sheet characteristic detection system according to claim 8, wherein
when the sheet characteristic detection device (2) is connected to the upstream side of the image forming device (3) in the sheet characteristic detection system including the image forming device (3), the controller (20, 30) causes the media sensor to detect at least one of a size, rigidity, resistance, a moisture content, a surface property, and a thickness of the sheet, or wherein
when the sheet characteristic detection device (2) is connected to the downstream side of the image forming device (3) in the sheet characteristic detection system including the image forming device (3), the controller (20, 30) causes the media sensor to detect at least one of a size, rigidity, and a moisture content of the sheet, or wherein
when the sheet characteristic detection device (2) is connected between a first image forming device (3) disposed on an upstream side in a sheet conveyance direction and a second image forming device (3) disposed on a downstream side in the sheet conveyance direction, the controller (20, 30) causes the media sensor to detect at least one of a size, resistance, a moisture content, and a surface property of the sheet.

10. The sheet characteristic detection system according to claim 1, wherein
when a first sheet characteristic detection device (2) is disposed on an upstream side of a first image forming device (3) disposed on an upstream side in the sheet characteristic detection system, and a second sheet characteristic detection device (2) is disposed between the first image forming device (3) and a second image forming device (3) disposed on a downstream side of the first image forming device (3), the controller (20, 30) changes a type of the sheet characteristic to be detected between the first sheet characteristic detection device (2) and the second sheet characteristic detection device (2).

11. The sheet characteristic detection system according to claim 10, wherein
the controller (20, 30) determines an image forming position or a magnification of an image by the second image forming device (3) based on each sheet size detected by each of the first sheet characteristic detection device (2) and the second sheet characteristic detection device (2), and determines a transfer condition or a fixing condition of the second image forming device (3) based on at least one of resistance, a moisture content, and a surface property of the sheet detected by the second sheet characteristic detection device (2), and wherein
the first image forming device (3) forms an image on a first surface of the sheet, and the second image forming device (3) forms an image on a second surface different from the first surface of the sheet, thereby forming images on both sides of the sheet.

12. The sheet characteristic detection system according to claim 1, wherein
when the sheet characteristic detection device (2) is connected between a first image forming device (3) disposed on an upstream side in a sheet conveyance direction and a second image forming device (3) disposed on a downstream side in the sheet conveyance direction, the controller (20, 30) changes a type of the sheet characteristic to be detected according to whether or not a sheet feeding device that houses sheets is connected between the first image forming device (3) and the second image forming device (3), or wherein
when the sheet characteristic detection device (2) is disposed in a sheet characteristic detection system including a first image forming device (3) and a second image forming device (3), the controller (20, 30) changes a type of the sheet characteristic to be detected based on information on whether to form an image only on one side of the sheet or to form an image on both sides of the sheet.

13. The sheet characteristic detection system according to claim 1, wherein
the controller (20, 30) changes a type of the sheet characteristic to be detected according to whether the sheet fed from the sheet feeding device is a first sheet or a second or subsequent sheet fed in a job.

14. The sheet characteristic detection system according to claim 13, wherein
the controller (20, 30) detects all types of sheet characteristics corresponding to the plurality of media sensors when the sheet fed is the first sheet, and detects only some types of sheet characteristics when the sheet fed is the second or subsequent sheet.

15. A sheet characteristic detection control program for detecting a sheet characteristic by a sheet characteristic detection device (2) including a media sensor, comprising
determining a type of the sheet characteristic to be detected by a plurality of media sensors included in the sheet characteristic detection device (2), wherein
the type of the sheet characteristic determined in the determining can be changed.
